(19) Europäisches Patentamt
European Patent Office
Office européen des brevets

(11) EP 3 744 779 A1

(12) **EUROPEAN PATENT APPLICATION**
published in accordance with Art. 153(4) EPC

(43) Date of publication:
**02.12.2020 Bulletin 2020/49**

(21) Application number: **18902813.7**

(22) Date of filing: **19.12.2018**

(51) Int Cl.:
***C08L 15/00*** *(2006.01)* ***B60C 1/00*** *(2006.01)*
***B62D 55/253*** *(2006.01)* ***B65G 15/32*** *(2006.01)*
***C08C 19/22*** *(2006.01)* ***C08C 19/25*** *(2006.01)*
***C08L 9/00*** *(2006.01)* ***F16F 1/36*** *(2006.01)*
***F16F 15/08*** *(2006.01)* ***F16L 11/10*** *(2006.01)*

(86) International application number:
**PCT/JP2018/046873**

(87) International publication number:
**WO 2019/146323 (01.08.2019 Gazette 2019/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.01.2018 JP 2018008992**

(71) Applicant: **Bridgestone Corporation**
**Chuo-Ku**
**Tokyo 104-8340 (JP)**

(72) Inventors:
- **SHODA, Yasuhiro**
  **Tokyo 104-8340 (JP)**
- **INUTSUKA, Shoko**
  **Tokyo 104-8340 (JP)**
- **TANEMURA, Shun**
  **Tokyo 104-8340 (JP)**
- **NAKATANI, Kenji**
  **Tokyo 104-8340 (JP)**

(74) Representative: **Oxley, Robin John George**
**Marks & Clerk LLP**
**15 Fetter Lane**
**London EC4A 1BW (GB)**

# (54) RUBBER COMPOSITION, TIRE, CONVEYOR BELT, RUBBER CRAWLER, VIBRATION ISOLATOR, SEISMIC ISOLATOR, AND HOSE

(57) Provided is a rubber composition capable of producing a rubber article having excellent balance between crack growth resistance and low heat generating property. The rubber composition comprises: a rubber component (a) containing a modified conjugated diene-based polymer (a1) and a multicomponent copolymer (a2) that contains a conjugated diene unit, a non-conjugated olefin unit, and an aromatic vinyl unit; and a filler (b).

*FIG. 1*

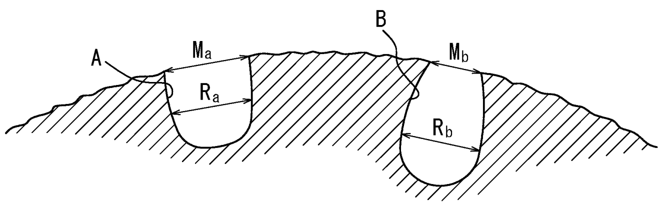


EP 3 744 779 A1

## Description

TECHNICAL FIELD

The present disclosure relates to a rubber composition, a tire, a conveyor belt, a rubber crawler, an anti-vibration device, a seismic isolation device, and a hose.

BACKGROUND

Rubber articles such as tires, conveyor belts, rubber crawlers, anti-vibration devices, seismic isolation devices, and hoses are usually required to have high durability. To meet this requirement, development of rubber material having high durability is desired.

We discovered that, as such rubber material, a multicomponent copolymer containing a conjugated diene unit, a non-conjugated olefin unit, and an aromatic vinyl unit can improve the durability, such as crack growth resistance, of rubber articles (PTL 1 below).

CITATION LIST

Patent Literature

PTL 1: WO 2015/190072 A1

SUMMARY

(Technical Problem)

However, our further study revealed that a rubber article using the foregoing multicomponent copolymer is not sufficiently improved in low heat generating property, and there is room for improvement as rubber material.

It could therefore be helpful to provide a rubber composition capable of producing a rubber article having excellent balance between crack growth resistance and low heat generating property.

It could also be helpful to provide a tire, a conveyor belt, a rubber crawler, an anti-vibration device, a seismic isolation device, and a hose having excellent balance between crack growth resistance and low heat generating property.

(Solution to Problem)

We provide the following.

A rubber composition according to the present disclosure comprises: a rubber component (a) containing a modified conjugated diene-based polymer (a1) and a multicomponent copolymer (a2) that contains a conjugated diene unit, a non-conjugated olefin unit, and an aromatic vinyl unit; and a filler (b).

A tire according to the present disclosure is produced using the foregoing rubber composition.

A conveyor belt according to the present disclosure is produced using the foregoing rubber composition.

A rubber crawler according to the present disclosure is produced using the foregoing rubber composition.

An anti-vibration device according to the present disclosure is produced using the foregoing rubber composition.

A seismic isolation device according to the present disclosure is produced using the foregoing rubber composition.

A hose according to the present disclosure is produced using the foregoing rubber composition.

(Advantageous Effect)

It is thus possible to provide a rubber composition capable of producing a rubber article having excellent balance between crack growth resistance and low heat generating property.

It is also possible to provide a tire, a conveyor belt, a rubber crawler, an anti-vibration device, a seismic isolation device, and a hose having excellent balance between crack growth resistance and low heat generating property.

BRIEF DESCRIPTION OF THE DRAWINGS

In the accompanying drawings:

FIG. 1 is a cross-sectional view (partially enlarged view) in an inner core direction of a particle of silica as an example; and

FIG. 2 is a diagram (schematic diagram) illustrating mercury charge and discharge curves of silica as an example by measurement using a mercury porosimeter based on a mercury press-in method.

## DETAILED DESCRIPTION

(1) Rubber composition

A rubber composition according to one of the disclosed embodiments (hereafter also referred to as "rubber composition according to this embodiment") comprises: a rubber component (a) containing a modified conjugated diene-based polymer (a1) and a multicomponent copolymer (a2) that contains a conjugated diene unit, a non-conjugated olefin unit, and an aromatic vinyl unit; and a filler (b). The rubber composition according to this embodiment may optionally further contain a silane coupling agent and other components.

Herein, the multicomponent copolymer (a2) that contains a conjugated diene unit, a non-conjugated olefin unit, and an aromatic vinyl unit is not included in the modified conjugated diene-based polymer (a1).

A multicomponent copolymer containing a conjugated diene unit, a non-conjugated olefin unit, and an aromatic vinyl unit has a tendency that, when a filler (e.g. carbon black, silica) is added, the filler does not disperse uniformly, as compared with other rubber components. Therefore, even when the filler is blended with the multicomponent copolymer, the effects of the filler cannot be achieved sufficiently. Moreover, the multicomponent copolymer typically has low compatibility with general-purpose rubber components such as butadiene rubber and styrene-butadiene rubber. Based on these facts, we discovered that, by employing a modified conjugated diene-based polymer as a rubber component used together with the multicomponent copolymer, the compatibility between the rubber components is enhanced, and that, by blending a filler with such rubber components, the filler can be further dispersed in the rubber components, particularly the modified conjugated diene-based polymer. Thus, high low heat generating property derived from the filler (b) can be sufficiently exhibited while maintaining high crack growth resistance derived from the multicomponent copolymer (a2).

The rubber composition according to this embodiment is therefore capable of producing a rubber article having excellent balance between crack growth resistance and low heat generating property.

Preferably, in the rubber composition according to this embodiment, the modified conjugated diene-based polymer (a1) forms a continuous phase, and the multicomponent copolymer (a2) forms a dispersed phase. As a result of the multicomponent copolymer (a2) forming a dispersed phase (relatively small domain) in the rubber composition, crystal collapse due to strain is facilitated, so that the crack growth resistance can be further improved. As a result of the modified conjugated diene-based polymer (a1) forming a continuous phase in the rubber composition, high viscosity derived from the modified conjugated diene-based polymer (a1) can be expressed effectively.

Whether the continuous phase of the modified conjugated diene-based polymer (a1) is present and whether the dispersed phase of the multicomponent copolymer (a2) is present can be determined, for example, using a scanning electron microscope (SEM).

The continuous phase of the modified conjugated diene-based polymer (a1) and the dispersed phase of the multicomponent copolymer (a2) in the rubber composition can be typically formed by kneading the modified conjugated diene-based polymer (a1) and the multicomponent copolymer (a2) by a conventional method.

Each component that can be contained in the rubber composition according to this embodiment will be described below.

(Rubber component (a))

The rubber component (a) contained in the rubber composition according to this embodiment contains the modified conjugated diene-based polymer (a1) and the multicomponent copolymer (a2) that contains a conjugated diene unit, a non-conjugated olefin unit, and aromatic vinyl unit. The rubber component (a) may contain other rubber components besides the modified conjugated diene-based polymer (a1) and the multicomponent copolymer (a2).

<Modified conjugated diene-based polymer (a1)>

The modified conjugated diene-based polymer (a1) can be obtained by modifying a conjugated diene-based polymer with a modifier. The conjugated diene-based polymer may be a homopolymer, or a copolymer formed using a conjugated diene-based monomer and a monomer other than the conjugated diene-based monomer. In particular, from the viewpoint of further improving the low heat generating property, the conjugated diene-based polymer is preferably a homopolymer or a copolymer of a conjugated diene-based monomer and an aromatic vinyl compound, and more preferably a homopolymer or a copolymer formed by polymerizing 80 mass% to 100 mass% of a conjugated diene-based monomer and 0 mass% to 20 mass% of an aromatic vinyl compound. These modified conjugated diene-based polymers may be used alone or in combination of two or more thereof.

Examples of the conjugated diene-based monomer include 1,3-butadiene, isoprene, 1,3-pentadiene, 2,3-dimethylbutadiene, 2-phenyl-1,3-butadiene, and 1,3-hexadiene. Of these, 1,3-butadiene is preferable. These conjugated diene-based monomers may be used alone or in combination of two or more thereof.

Examples of the aromatic vinyl compound as a monomer include styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene. Of these, styrene is preferable. These aromatic vinyl compounds may be used alone or in combination of two or more thereof.

The modified conjugated diene-based polymer (a1) can be obtained by a polymerization method such as anionic polymerization, coordination polymerization, or emulsion polymerization. The modifier may be a modifier that reacts with a polymerization active end of anionic polymerization or coordination polymerization, or an amide part of a lithium amide compound used as a polymerization initiator. The modifier may be copolymerized as a monomer in emulsion polymerization.

The modifier used in the modification for the modified conjugated diene-based polymer will be described below. The modifier is more preferably a modifier having one or more atoms selected from a nitrogen atom, a silicon atom, and an oxygen atom. In other words, the modified conjugated diene-based polymer (a1) is preferably obtained by modification with the modifier having one or more atoms selected from a nitrogen atom, a silicon atom, and an oxygen atom. Such a modified conjugated diene-based polymer (a1) has a nitrogen-containing functional group, a silicon-containing functional group, or an oxygen-containing functional group, and thus can interact with the filler (b) to enhance dispersibility. From the same viewpoint, the modifier is more preferably a modifier having a silicon atom and an oxygen atom or having a silicon atom and a nitrogen atom in its molecule, and further preferably a modifier having a silicon atom, an oxygen atom, and a nitrogen atom in its molecule.

The modifier is preferably an alkoxysilane compound, from the viewpoint of having high affinity for the filler (b). The alkoxysilane compound is, for example, an alkoxysilane compound represented by the following general formula (I):

$$R^1{}_a\text{-Si-}(OR^2)_{4-a} \cdots \qquad (I)$$

(where $R^1$ and $R^2$ are each independently a univalent aliphatic hydrocarbon group having a carbon number of 1 to 20 or a univalent aromatic hydrocarbon group having a carbon number of 6 to 18, a is an integer of 0 to 2, a plurality of $OR^2$, if present, may be the same or different, and no active proton is contained in the molecule).

Specific examples of the alkoxysilane compound represented by the general formula (I) include N-(1,3-dimethylbutylidene)-3-(triethoxysilyl)-1-propaneamine, tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimetridimethoxysilane, methylphenyldimethoxysilane, dimethyldiethoxysilane, vinyltrimethoxysilane, vinyltriethoxysilane, and divinyldiethoxysilane. Of these, N-(1,3-dimethylbutylidene)-3-(triethoxysilyl)-1-propaneamine, tetraethoxysilane, methyltriethoxysilane, and dimethyldiethoxysilane are preferable.

The modifier may be a hydrocarbyloxy silane compound, from the viewpoint of having high affinity for the filler (b). The hydrocarbyloxy silane compound is preferably a hydrocarbyloxy silane compound represented by the following general formula (II):

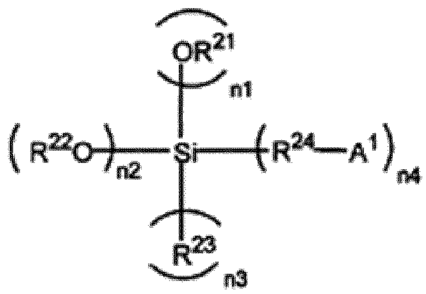

· · · (II)

(where n1 + n2 + n3 + n4 = 4 (where n2 is an integer of 1 to 4, and n1, n3, and n4 are each an integer of 0 to 3), $A^1$ is at least one functional group selected from a saturated cyclic tertiary amine compound residual group, an unsaturated cyclic tertiary amine compound residual group, a ketimine residual group, a nitrile group, a (thio)isocyanato group (indicating an isocyanato group or a thioisocyanato group, hereafter the same), a (thio)epoxy group, an isocyanuric acid

trihydrocarbyl ester group, a carbonic acid dihydrocarbyl ester group, a nitrile group, a pyridine group, a (thio)ketone group, a (thio)aldehyde group, an amide group, a (thio)carboxylic acid ester group, a (thio)carboxylic acid ester metal salt, a carboxylic acid anhydride residual group, a carboxylic acid halogen compound residual group, and a primary or secondary amino group having a hydolyzable group and a mercapto group having a hydolyzable group, and may be the same or different in the case where n4 is 2 or more, $A^1$ may be a bivalent group that binds to Si and forms a cyclic structure, $R^{21}$ is a univalent aliphatic or cycloaliphatic hydrocarbon group having a carbon number of 1 to 20 or a univalent aromatic hydrocarbon group having a carbon number of 6 to 18, and may be the same or different in the case where n1 is 2 or more, $R^{23}$ is a univalent aliphatic or cycloaliphatic hydrocarbon group having a carbon number of 1 to 20, a univalent aromatic hydrocarbon group having a carbon number of 6 to 18, or a halogen atom (fluorine, chlorine, bromine, or iodine), and may be the same or different in the case where n3 is 2 or more, $R^{22}$ is a univalent aliphatic or cycloaliphatic hydrocarbon group having a carbon number of 1 to 20 or a univalent aromatic hydrocarbon group having a carbon number of 6 to 18, both of which may contain a nitrogen atom and/or a silicon atom, and may be the same or different or form a ring together in the case where n2 is 2 or more, and $R^{24}$ is a bivalent aliphatic or cycloaliphatic hydrocarbon group having a carbon number of 1 to 20 or a bivalent aromatic hydrocarbon group having a carbon number of 6 to 18, and may be the same or different in the case where n4 is 2 or more).

As the hydolyzable group in the primary or secondary amino group having a hydolyzable group or the mercapto group having a hydolyzable group, a trimethylsilyl group and a tert-butyldimethylsilyl group are preferable, and a trimethylsilyl group is particularly preferable.

In the present disclosure, the "univalent aliphatic or cycloaliphatic hydrocarbon group having a carbon number of 1 to 20" refers to a univalent aliphatic hydrocarbon group having a carbon number of 1 to 20 or a univalent cycloaliphatic hydrocarbon group having a carbon number of 1 to 20. The same applies to the bivalent hydrocarbon group.

As a specific example of the hydrocarbyloxy silane compound represented by the general formula (II), [N,N-bis(trimethylsilyl)-(3-amino-1-propyl)](methyl)(diethoxy)silane is preferable.

The hydrocarbyloxy silane compound represented by the general formula (II) is more preferably a hydrocarbyloxy silane compound represented by the following general formula (III):

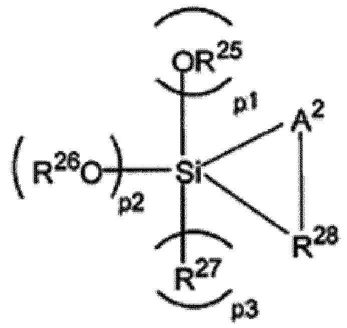

· · · (III)

(where p1 + p2 + p3 = 2 (where p2 is an integer of 1 to 2, and p1 and p3 are each an integer of 0 to 1), $A^2$ is NRa (Ra is a univalent hydrocarbon group, a hydolyzable group, or a nitrogen-containing organic group. As the hydolyzable group, a trimethylsilyl group and a tert-butyldimethylsilyl group are preferable, and a trimethylsilyl group is particularly preferable) or sulfur, $R^{25}$ is a univalent aliphatic or cycloaliphatic hydrocarbon group having a carbon number of 1 to 20 or a univalent aromatic hydrocarbon group having a carbon number of 6 to 18, $R^{27}$ is a univalent aliphatic or cycloaliphatic hydrocarbon group having a carbon number of 1 to 20, a univalent aromatic hydrocarbon group having a carbon number of 6 to 18, or a halogen atom (fluorine, chlorine, bromine, or iodine), $R^{26}$ is a univalent aliphatic or cycloaliphatic hydrocarbon group having a carbon number of 1 to 20, a univalent aromatic hydrocarbon group having a carbon number of 6 to 18, or a nitrogen-containing organic group, both of which may contain a nitrogen atom and/or a silicon atom, and is the same or different or forms a ring together in the case where p2 is 2, and $R^{28}$ is a bivalent aliphatic or cycloaliphatic hydrocarbon group having a carbon number of 1 to 20 or a bivalent aromatic hydrocarbon group having a carbon number of 6 to 18).

The hydrocarbyloxy silane compound represented by the general formula (II) is more preferably a hydrocarbyloxy silane compound represented by the following general formula (IV):

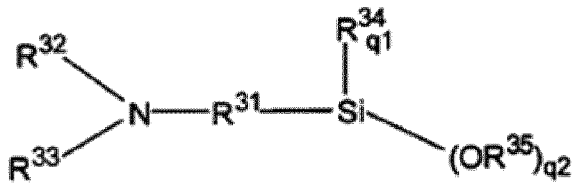

· · · (IV)

(where q1 + q2 = 3 (where q1 is an integer of 0 to 2, and q2 is an integer of 1 to 3), $R^{31}$ is a bivalent aliphatic or cycloaliphatic hydrocarbon group having a carbon number of 1 to 20 or a bivalent aromatic hydrocarbon group having a carbon number of 6 to 18, $R^{32}$ and $R^{33}$ are each independently a hydolyzable group, a univalent aliphatic or cycloaliphatic hydrocarbon group having a carbon number of 1 to 20, or a univalent aromatic hydrocarbon group having a carbon number of 6 to 18, $R^{34}$ is a univalent aliphatic or cycloaliphatic hydrocarbon group having a carbon number of 1 to 20 or a univalent aromatic hydrocarbon group having a carbon number of 6 to 18, and may be the same or different in the case where q1 is 2, and $R^{35}$ is a univalent aliphatic or cycloaliphatic hydrocarbon group having a carbon number of 1 to 20 or a univalent aromatic hydrocarbon group having a carbon number of 6 to 18, and may be the same or different in the case where q2 is 2 or more), or a hydrocarbyloxy silane compound represented by the following general formula (V):

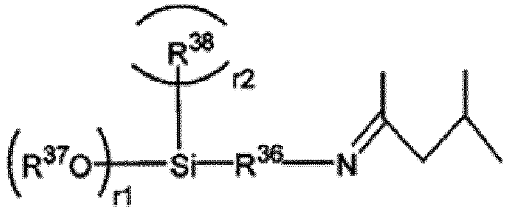

· · · (V)

(where r1 + r2 = 3 (where r1 is an integer of 1 to 3, and r2 is an integer of 0 to 2), $R^{36}$ is a bivalent aliphatic or cycloaliphatic hydrocarbon group having a carbon number of 1 to 20 or a bivalent aromatic hydrocarbon group having a carbon number of 6 to 18, $R^{37}$ is a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a univalent aliphatic or cycloaliphatic hydrocarbon group having a carbon number of 1 to 20, or a univalent aromatic hydrocarbon group having a carbon number of 6 to 18, and may be the same or different in the case where r1 is 2 or more, and $R^{38}$ is a hydrocarbyloxy group having a carbon number of 1 to 20, a univalent aliphatic or cycloaliphatic hydrocarbon group having a carbon number of 1 to 20, or a univalent aromatic hydrocarbon group having a carbon number of 6 to 18, and may be the same or different in the case where r2 is 2).

Moreover, the modifier is preferably a hydrocarbyloxy silane compound having two or more nitrogen atoms represented by the following general formula (VI):

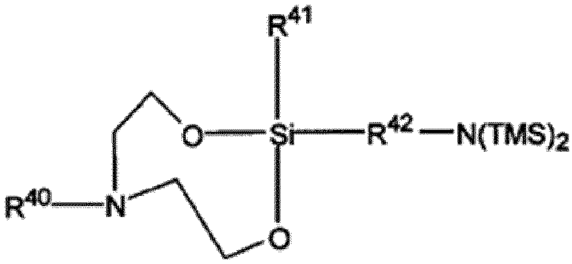

· · · (VI)

(where TMS is a trimethylsilyl group, $R^{40}$ is a trimethylsilyl group, a univalent aliphatic or cycloaliphatic hydrocarbon group having a carbon number of 1 to 20, or a univalent aromatic hydrocarbon group having a carbon number of 6 to 18, $R^{41}$ is a hydrocarbyloxy group having a carbon number of 1 to 20, a univalent aliphatic or cycloaliphatic hydrocarbon group having a carbon number of 1 to 20, or a univalent aromatic hydrocarbon group having a carbon number of 6 to 18, and $R^{42}$ is a bivalent aliphatic or cycloaliphatic hydrocarbon group having a carbon number of 1 to 20 or a bivalent aromatic hydrocarbon group having a carbon number of 6 to 18), or a hydrocarbyloxy silane compound having two or more nitrogen atoms represented by the following general formula (VII):

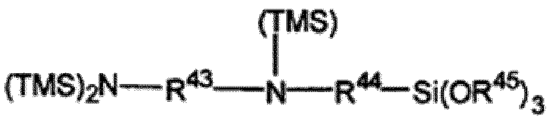

· · · (VII)

(where TMS is a trimethylsilyl group, $R^{43}$ and $R^{44}$ are each independently a bivalent aliphatic or cycloaliphatic hydrocarbon group having a carbon number of 1 to 20 or a bivalent aromatic hydrocarbon group having a carbon number of 6 to 18, $R^{45}$ is a univalent aliphatic or cycloaliphatic hydrocarbon group having a carbon number of 1 to 20 or a univalent aromatic hydrocarbon group having a carbon number of 6 to 18, and the plurality of $R^{45}$ may be the same or different).

The hydrocarbyloxy silane compound represented by the general formula (II) is more preferably a hydrocarbyloxy silane compound represented by the following general formula (VIII):

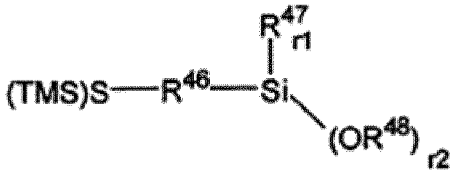

· · · (VIII)

(where r1 + r2 = 3 (where r1 is an integer of 0 to 2, and r2 is an integer of 1 to 3), TMS is a trimethylsilyl group, $R^{46}$ is a bivalent aliphatic or cycloaliphatic hydrocarbon group having a carbon number of 1 to 20 or a bivalent aromatic hydrocarbon group having a carbon number of 6 to 18, $R^{47}$ and $R^{48}$ are each independently a univalent aliphatic or cycloaliphatic hydrocarbon group having a carbon number of 1 to 20 or a univalent aromatic hydrocarbon group having a carbon number of 6 to 18, and the plurality of $R^{47}$ or $R^{48}$ may be the same or different).

Further, the modifier is preferably a hydrocarbyloxy silane compound represented by the following general formula (IX):

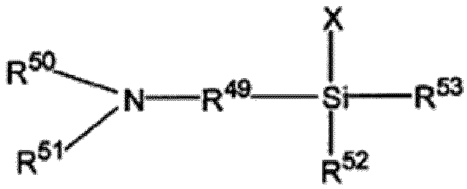

· · · (IX)

(where X is a halogen atom (fluorine, chlorine, bromine, or iodine), $R^{49}$ is a bivalent aliphatic or cycloaliphatic hydrocarbon group having a carbon number of 1 to 20 or a bivalent aromatic hydrocarbon group having a carbon number of 6 to 18, $R^{50}$ and $R^{51}$ are each independently a hydolyzable group, a univalent aliphatic or cycloaliphatic hydrocarbon group having a carbon number of 1 to 20, or a univalent aromatic hydrocarbon group having a carbon number of 6 to 18 or $R^{50}$ and $R^{51}$ bind to form a bivalent organic group, and $R^{52}$ and $R^{53}$ are each independently a halogen atom (fluorine, chlorine, bromine, or iodine), a hydrocarbyloxy group, a univalent aliphatic or cycloaliphatic hydrocarbon group having a carbon number of 1 to 20, or a univalent aromatic hydrocarbon group having a carbon number of 6 to 18). $R^{50}$ and $R^{51}$ are preferably a hydolyzable group. The hydolyzable group is preferably a trimethylsilyl group or a tert-butyldimethylsilyl group, and more preferably a trimethylsilyl group.

The modifier is preferably a compound having a structure represented by any of the following general formulas (X) to (XIII):

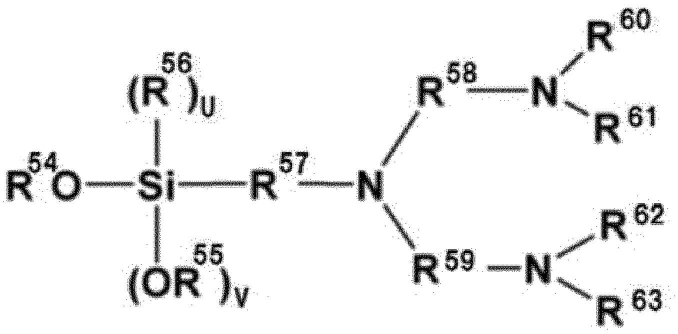

··· (X)

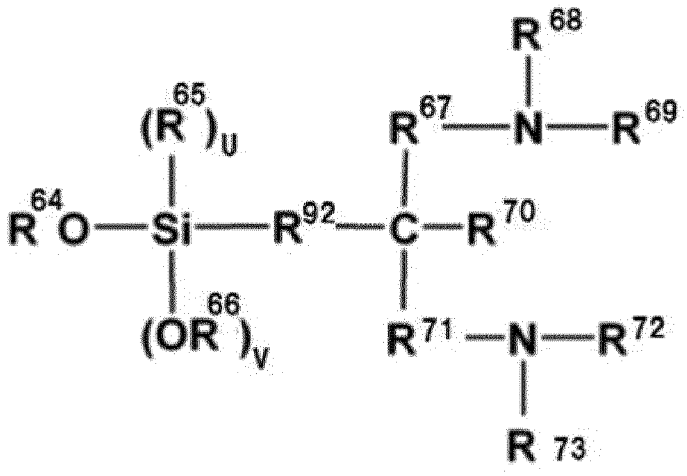

••• (XI)

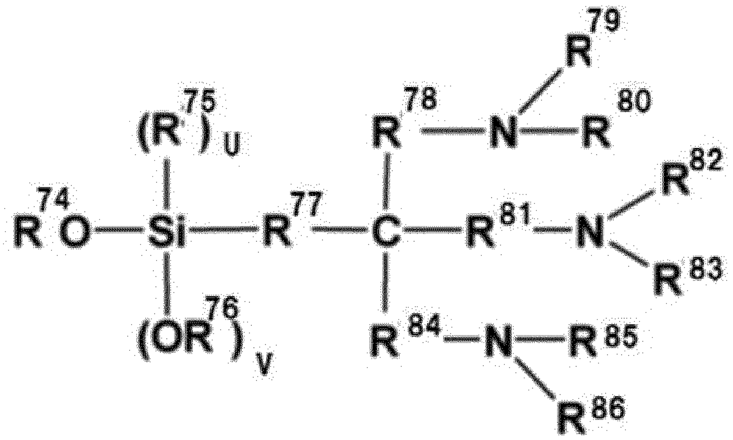

••• (XII)

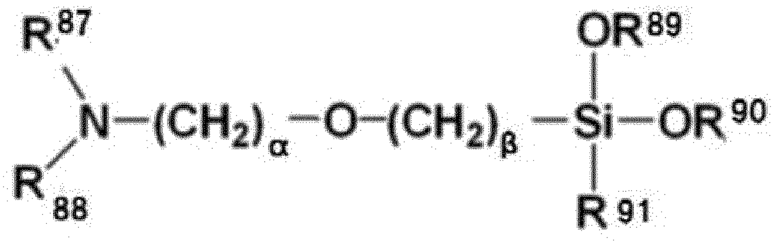

••• (XIII)

In the general formula (X) to (XIII), the symbols U and V are each an integer of 0 to 2 satisfying the relationship U + V = 2, and $R^{54}$ to $R^{92}$ may be the same or different and are each a bivalent aliphatic or cycloaliphatic hydrocarbon group having a carbon number of 1 to 20 or a bivalent aromatic hydrocarbon group having a carbon number of 6 to 18. In the general formula (XIII), $\alpha$ and $\beta$ are each an integer of 0 to 5.

Of the compounds satisfying the general formulas (X) to (XII), N1,N1,N7-tetramethyl-4-((trimethoxysilyl)methyl)-1,7heptane, 2-((hexyldimethoxysilyl)methyl)-N1,N1,N3,N3-2-pentamethylpropane-1,3-di amine, N1-(3-(dimethylamino)propyl-N3,N3-dimethyl-N1-(3-(trimethoxysilyl)propyl )propane-1,3-diamine, and 4-(3-(dimethylamino)propyl)-N1,N1,N7,N7-tetramethyl-4-((trimethoxysilyl) methyl)heptane-1,7-diamine are particularly preferable.

Of the compounds satisfying the general formula (XIII), N,N-dimethyl-2-(3-(dimethoxymethylsilyl)propoxy)ethaneamine, N,N-bis(trimethylsilyl)-2-(3-(trimethoxysilyl)propoxy)ethaneamine, N,N-dimethyl-2-(3-(trimethoxysilyl)propoxy)ethaneamine, and N,N-dimethyl-3-(3-(trimethoxysilyl)propoxy)propane-1-amine are particularly preferable.

The hydrocarbyloxy silane compound represented by any of these general formulas (II) to (XIII) is preferably used as a modifier in the case of producing the modified conjugated diene-based polymer by anionic polymerization.

The hydrocarbyloxy silane compound represented by any of these general formulas (II) to (XIII) is preferably an alkoxysilane compound.

Specific examples of modifiers suitable in the case of producing the modified conjugated diene-based polymer by anionic polymerization include 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone, and 1-methyl-2-pyrrolidone.

The modifier is preferably an amide part of a lithium amide compound used as a polymerization initiator in anionic polymerization. Examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, and lithium methylphenethylamide. For example, a modifier that is an amide part of lithium hexamethyleneimide is hexamethyleneimine, a modifier that is an amide part of lithium pyrrolidide is pyrrolidine, and a modifier that is an amide part of lithium piperidide is piperidine.

Specific examples of modifiers suitable in the case of producing the modified conjugated diene-based polymer by coordination polymerization include 2-cyanopyridine and 3,4-ditrimethylsilyloxybenzaldehyde.

Specific examples of modifiers suitable in the case of producing the modified conjugated diene-based polymer by emulsion polymerization include 3,4-ditrimethylsilyloxybenzaldehyde and 4-hexamethyleneiminoalkylstyrene.

The modification rate of the modified conjugated diene-based polymer (a1) is preferably 30 % or more and more preferably 50 % or more, from the viewpoint of effectively improving the low heat generating property.

For example, in the case where the modified functional group is an amino group, the modification rate is measured by the following method:

The modified conjugated diene-based polymer is dissolved in toluene, and subsequently precipitated in a large amount of methanol to separate an amino group-containing compound not bonded to the modified conjugated diene-based polymer from the rubber, and then dried. The polymer subjected to this treatment is used as a sample to quantitatively determine the whole amino group content by a "testing method for total amine values" described in JIS K7237. Subsequently, the polymer subjected to the treatment is used as a sample to quantitatively determine the contents of a secondary amino group and a tertiary amino group by an "acetylacetone blocked method". As a solvent for dissolving the sample, o-nitrotoluene is used, to which acetylacetone is added to carry out potentiometric titration with a perchloric acid solution. The contents of the secondary amino group and the tertiary amino group are subtracted from the whole amino group content to determine the content of a primary amino group, and the determined content is divided by the weight of the polymer used for the analysis to determine the content of the primary amino group bonded to the polymer.

Regarding the tertiary amino group content, the polymer is dissolved in toluene, and subsequently precipitated in a large amount of methanol to separate an amino group-containing compound not bonded to the modified conjugated diene-based polymer from the rubber, and then dried. The polymer subjected to this treatment is used as a sample to quantitatively determine the tertiary amino group content by an "acetylation method". As a solvent for dissolving the sample, o-nitrotoluene + acetic acid are used, to which a formic acid acetic anhydride mixed solution is added to carry out potentiometric titration with a perchloric acid solution. The tertiary amino group content is then divided by the weight of the polymer used for the analysis to determine the content of the tertiary amino group bonded to the polymer.

In the rubber composition according to this embodiment, the proportion of the modified conjugated diene-based polymer (a1) in the rubber component (a) is preferably 60 mass% to 95 mass%. As a result of the proportion being 60 mass% or more, the dispersibility of the filler (b) and thus the low heat generating property can be further improved. As a result of the proportion being 95 mass% or less, the crack growth resistance can be sufficiently improved.

<Multicomponent copolymer (a2)>

The multicomponent copolymer (a2) used in the present disclosure contains a conjugated diene unit, a non-conjugated olefin unit, and an aromatic vinyl unit.

Herein, the term "conjugated diene unit" denotes a unit corresponding to a structural unit derived from a conjugated diene compound in the multicomponent copolymer, the term "non-conjugated olefin unit" denotes a unit corresponding to a structural unit derived from a non-conjugated olefin compound in the multicomponent copolymer, and the term "aromatic vinyl unit" denotes a unit corresponding to a structural unit derived from an aromatic vinyl compound in the multicomponent copolymer.

Herein, the term "conjugated diene compound" denotes a conjugated-system diene compound, the term "non-conjugated olefin compound" denotes a non-conjugated-system aliphatic unsaturated hydrocarbon compound having one or more carbon-carbon double bonds, and the term "aromatic vinyl compound" denotes an aromatic compound substituted with at least a vinyl group. The "aromatic vinyl compound" is not included in the conjugated diene compound.

Herein, the term "multicomponent copolymer" denotes a copolymer obtained by polymerizing three or more types of monomers.

<<Conjugated diene unit>>

The multicomponent copolymer (a2) contains a conjugated diene unit. The conjugated diene unit is typically derived from a conjugated diene compound as a monomer. Since the multicomponent copolymer (a2) can be obtained through polymerization using a conjugated diene compound as a monomer, the multicomponent copolymer (a2) has better crosslinking property and filler reinforcing property than a copolymer obtained through polymerization using a non-conjugated diene compound such as EPDM which is well known. The multicomponent copolymer (a2) thus has advantage that the mechanical property of a rubber composition and a rubber article produced using the multicomponent copolymer (a2) can be further improved.

One conjugated diene compound may be used alone, or two or more conjugated diene compounds may be used in combination. That is, the multicomponent copolymer (a2) may contain one conjugated diene unit alone or two or more conjugated diene units.

The conjugated diene compound preferably has a carbon number of 4 to 8. Specific examples of the conjugated diene compound include 1,3-butadiene, isoprene, 1,3-pentadiene, and 2,3-dimethyl-1,3-butadiene. The conjugated diene compound as a monomer in the multicomponent copolymer (a2) preferably contains at least one of 1,3-butadiene and isoprene, more preferably consists only of 1,3-butadiene and isoprene, and further preferably consists only of 1,3-butadiene, from the viewpoint of effectively improving the crack growth resistance of the rubber composition and the rubber article. In other words, the conjugated diene unit in the multicomponent copolymer (a2) preferably contains at least one of a 1,3-butadiene unit and an isoprene unit, more preferably consists only of a 1,3-butadiene unit and an isoprene unit, and further preferably consists only of a 1,3-butadiene unit.

The proportion of the conjugated diene unit in the multicomponent copolymer (a2) is preferably 1 mol% or more, and is preferably 50 mol% or less. As a result of the proportion of the conjugated diene unit being 1 mol% or more, a rubber composition and a rubber article excellent in elongation can be obtained. As a result of the proportion of the conjugated diene unit being 50 mol% or less, the weather resistance of the rubber article can be favorably maintained. From the same viewpoint, the proportion of the conjugated diene unit in the multicomponent copolymer (a2) is more preferably 3 mol% or more, and is more preferably 40 mol% or less, further preferably 30 mol% or less, even further preferably 20 mol% or less, and particularly preferably 15 mol% or less.

<<Non-conjugated olefin unit>>

The multicomponent copolymer (a2) contains a non-conjugated olefin unit. The non-conjugated olefin unit is typically derived from a non-conjugated olefin compound as a monomer.

One non-conjugated olefin compound may be used alone, or two or more non-conjugated olefin compounds may be used in combination. That is, the multicomponent copolymer (a2) may contain one non-conjugated olefin unit alone or two or more non-conjugated olefin units.

The non-conjugated olefin compound preferably has a carbon number of 2 to 10. Specific examples of the non-conjugated olefin compound include α-olefins such as ethylene, propylene, 1-butene, 1-pentene, 1-hexene, 1-heptene, and 1-octene, and heteroatom-substituted alkene compounds such as vinyl pivalate, 1-phenylthioethane, and N-vinylpyrrolidone. The non-conjugated olefin compound as a monomer in the multicomponent copolymer (a2) preferably does not have a cyclic structure, is more preferably α-olefin, further preferably contains ethylene, and even further preferably consists only of ethylene, from the viewpoint of forming a crystal structure for effectively enhancing the crack growth resistance in the multicomponent copolymer (a2). In other words, the non-conjugated olefin unit in the multicomponent copolymer (a2) preferably does not have a cyclic structure, is more preferably an α-olefin unit, further preferably contains an ethylene unit, and even further preferably consists only of an ethylene unit.

The proportion of the non-conjugated olefin unit in the multicomponent copolymer (a2) is preferably 40 mol% or more, and is preferably 97 mol% or less. As a result of the proportion of the non-conjugated olefin unit being 40 mol% or more, degradation in weather resistance and degradation in breaking resistance (especially, rupture strength (Tb)) caused by an excessively high proportion of the conjugated diene unit and the aromatic vinyl unit can be suppressed. As a result of the proportion of the non-conjugated olefin unit being 97 mol% or less, degradation in crack growth resistance associated with lack of network formation and degradation in co-crosslinking property with other members caused by an excessively low proportion of the conjugated diene unit and the aromatic vinyl unit can be suppressed. From the same viewpoint, the proportion of the non-conjugated olefin unit in the multicomponent copolymer (a2) is more preferably 45 mol% or more, further preferably 55 mol% or more, and even further preferably 65 mol% or more, and is more preferably 95 mol% or less, and further preferably 90 mol% or less.

<<Aromatic vinyl unit>>

The multicomponent copolymer (a2) contains an aromatic vinyl unit. The aromatic vinyl unit is typically derived

from an aromatic vinyl compound as a monomer.

One aromatic vinyl compound may be used alone, or two or more aromatic vinyl compounds may be used in combination. That is, the multicomponent copolymer (a2) may contain one aromatic vinyl unit alone or two or more aromatic vinyl units.

The aromatic vinyl compound preferably has a vinyl group directly bonded to an aromatic ring and has a carbon number of 8 to 10. Specific examples of the aromatic vinyl compound include styrene, o-methylstyrene, m-methylstyrene, p-methylstyrene, o,p-dimethylstyrene, o-ethylstyrene, m-ethylstyrene, and p-ethylstyrene. The aromatic vinyl compound as a monomer in the multicomponent copolymer (a2) preferably contains styrene, and more preferably consists only of styrene, from the viewpoint of forming a crystal structure for effectively enhancing the crack growth resistance in the multicomponent copolymer (a2). In other words, the aromatic vinyl unit in the multicomponent copolymer (a2) preferably contains a styrene unit, and more preferably consists only of a styrene unit.

The proportion of the aromatic vinyl unit in the multicomponent copolymer (a2) is preferably 2 mol% or more, and is preferably 35 mol% or less. As a result of the proportion of the aromatic vinyl unit being 2 mol% or more, the breaking resistance at high temperature can be improved. As a result of the proportion of the aromatic vinyl unit being 35 mol% or less, degradation in high fuel efficiency can be suppressed. From the same viewpoint, the proportion of the aromatic vinyl unit in the multicomponent copolymer (a2) is more preferably 3 mol% or more, and is more preferably 30 mol% or less, further preferably 25 mol% or less, and even further preferably 14 mol% or less.

The number of types of monomers in the multicomponent copolymer (a2) is not limited, as long as the multicomponent copolymer (a2) contains the conjugated diene unit, the non-conjugated olefin unit, and the aromatic vinyl unit. The multicomponent copolymer (a2) may have one or more structural units other than the conjugated diene unit, the non-conjugated olefin unit, and the aromatic vinyl unit. From the viewpoint of achieving desired effects, the proportion of the other structural units in the multicomponent copolymer (a2) is preferably 30 mol% or less, more preferably 20 mol% or less, further preferably 10 mol% or less, and even further preferably 0 mol% (i.e. the multicomponent copolymer (a2) contains no other structural unit).

The multicomponent copolymer (a2) at least contains one type of conjugated diene unit, one type of non-conjugated olefin unit, and one type of aromatic vinyl unit. From the viewpoint of achieving desired effects, the multicomponent copolymer (a2) is preferably a copolymer formed by performing polymerization at least using one type of conjugated diene compound, one type of non-conjugated olefin compound, and one type of aromatic vinyl compound as monomers.

The multicomponent copolymer (a2) is more preferably a terpolymer consisting only of one type of conjugated diene unit, one type of non-conjugated olefin unit, and one type of aromatic vinyl unit, and further preferably a terpolymer consisting only of a 1,3-butadiene unit, an ethylene unit, and a styrene unit. Herein, the term "one type of conjugated diene unit" includes conjugated diene units having different binding modes.

Preferably, in the multicomponent copolymer (a2), the proportion of the conjugated diene unit is 1 mol% to 50 mol%, the proportion of the non-conjugated olefin unit is 40 mol% to 97 mol%, and the proportion of the aromatic vinyl unit is 2 mol% to 35 mol%. In this case, the crack growth resistance and the low heat generating property can be further improved.

The multicomponent copolymer (a2) preferably has a main chain consisting only of an acyclic structure. This further improves the crack growth resistance. NMR is used as a principal measurement means for determining whether the main chain of the copolymer has a cyclic structure. Specifically, in the case where a peak derived from a cyclic structure existing in the main chain (for example, a peak appearing at 10 ppm to 24 ppm in the case of three- to five-membered rings) is not observed, it is determined that the main chain of the copolymer consists only of an acyclic structure.

The melting point of the multicomponent copolymer (a2) measured by a differential scanning calorimeter (DSC) is preferably 30 °C to 130 °C. As a result of the melting point being 30 °C or more, a rubber composition having high crack growth resistance in a temperature region in which crystals are present and having high elastic modulus can be produced. As a result of the melting point being 130 °C or less, the non-conjugated olefin unit having high crystallinity easily melts during kneading of the rubber composition, and thus the operability can be improved.

The melting point of the multicomponent copolymer (a2) can be measured using a differential scanning calorimeter in accordance with JIS K 7121-1987.

The endothermic peak energy of the multicomponent copolymer (a2) from 0 °C to 120 °C measured by a DSC is preferably 10 J/g to 150 J/g. As a result of the endothermic peak energy being 10 J/g or more, the rigidity of the rubber article can be further enhanced. As a result of the endothermic peak energy being 150 J/g or less, degradation in crack growth resistance can be suppressed, and the operability when kneading the rubber composition can be improved.

The endothermic peak energy of the multicomponent copolymer (a2) can be measured using a differential scanning calorimeter in accordance with JIS K 7121-1987.

The glass transition temperature of the multicomponent copolymer (a2) measured by a DSC is preferably 0 °C or less. As a result of the glass transition temperature being 0 °C or less, a rubber composition having favorable high fuel efficiency can be produced.

The glass transition temperature of the multicomponent copolymer (a2) can be measured using a differential scanning calorimeter in accordance with JIS K 7121-1987.

The degree of crystallinity of the multicomponent copolymer (a2) is preferably 0.5 % to 50 %. As a result of the degree of crystallinity being 0.5 % or more, the rigidity of the rubber article can be further enhanced. As a result of the degree of crystallinity being 50 % or less, degradation in crack growth resistance can be suppressed, and the operability when kneading the rubber composition can be improved.

Specifically, the degree of crystallinity of the multicomponent copolymer (a2) can be calculated from the ratio between the crystal melting energy of polyethylene composed of a 100 % crystal component and the melting peak energy of the multicomponent copolymer measured using a DSC in accordance with JIS K 7121-1987.

The weight-average molecular weight (Mw) of the multicomponent copolymer (a2) is preferably 10,000 or more, and is preferably 10,000,000 or less. As a result of the Mw of the multicomponent copolymer (a2) being 10,000 or more, sufficient mechanical strength of the rubber material and the rubber article can be ensured. As a result of the Mw of the multicomponent copolymer (a2) being 10,000,000 or less, high operability can be maintained. From the same viewpoint, the Mw of the multicomponent copolymer (a2) is more preferably 100,000 or more, and further preferably 150,000 or more, and is more preferably 9,000,000 or less, and further preferably 8,000,000 or less.

The number-average molecular weight (Mn) of the multicomponent copolymer (a2) is preferably 10,000 or more, and is preferably 10,000,000 or less. As a result of the Mn of the multicomponent copolymer (a2) being 10,000 or more, sufficient mechanical strength of the rubber material and the rubber article can be ensured. As a result of the Mn of the multicomponent copolymer (a2) being 10,000,000 or less, high operability can be maintained. From the same viewpoint, the Mn of the multicomponent copolymer (a2) is more preferably 50,000 or more, and further preferably 100,000 or more, and is more preferably 9,000,000 or less, and further preferably 8,000,000 or less.

The molecular weight distribution (Mw/Mn) of the multicomponent copolymer (a2) is preferably 1.00 or more, and is preferably 4.00 or less. As a result of the molecular weight distribution of the multicomponent copolymer (a2) being 4.00 or less, sufficient homogeneity can be imparted to the physical properties of the multicomponent copolymer. From the same viewpoint, the molecular weight distribution of the multicomponent copolymer (a2) is more preferably 3.50 or less, and further preferably 3.00 or less. The molecular weight distribution of the multicomponent copolymer (a2) is more preferably 1.50 or more, and further preferably 1.80 or more.

The weight-average molecular weight, the number-average molecular weight, and the molecular weight distribution described above are measured by gel permeation chromatography (GPC) using polystyrene as a standard substance.

<<Production method for multicomponent copolymer>>

The multicomponent copolymer (a2) can be produced, for example, through a step (polymerization step) of copolymerizing at least the conjugated diene compound, the non-conjugated olefin compound, and the aromatic vinyl compound as monomers. In the production of the multicomponent copolymer (a2), other steps such as a coupling step and a cleaning step may be optionally performed in addition to the polymerization step. In the production of the multicomponent copolymer (a2), it is preferable to add only the non-conjugated olefin compound and the aromatic vinyl compound in the presence of a polymerization catalyst without adding the conjugated diene compound, and polymerize them. Particularly in the case of using the below-described polymerization catalyst composition, it is likely to be difficult to polymerize the non-conjugated olefin compound and/or the aromatic vinyl compound in the presence of the conjugated diene compound, because the conjugated diene compound has higher reactivity than the non-conjugated olefin compound and the aromatic vinyl compound. It is also likely to be difficult to polymerize the conjugated diene compound first and then additionally polymerize the non-conjugated olefin compound and the aromatic vinyl compound, given the properties of the catalyst.

The polymerization step may be performed using any polymerization method such as solution polymerization, suspension polymerization, liquid phase bulk polymerization, emulsion polymerization, gas phase polymerization, or solid phase polymerization. In the case of using a solvent in the polymerization reaction, any solvent that is inactive in the polymerization reaction can be used. Examples include toluene, cyclohexane, and normal hexane.

In the polymerization step, the polymerization reaction is preferably performed in an atmosphere of inert gas and preferably nitrogen gas or argon gas. The polymerization temperature of the polymerization reaction is not limited, but is preferably in a range of -100 °C to 200 °C as an example, and may be approximately room temperature. When the polymerization temperature is increased, the selectivity of cis-1,4 bond in the conjugated diene unit may decrease. The pressure of the polymerization reaction is preferably in a range of 0.1 MPa to 10.0 MPa in order to sufficiently incorporate the conjugated diene compound into the polymerization reaction system. The reaction time of the polymerization reaction may be selected as appropriate depending on conditions such as the polymerization catalyst type and the polymerization temperature. For example, the reaction time is preferably in a range of 1 sec to 10 days.

In the polymerization step, the polymerization reaction may be terminated using a terminator such as methanol,

ethanol, or isopropanol.

The polymerization step may be performed in one stage, or in multiple (i.e. two or more) stages. The polymerization step in one stage is a step of causing simultaneous reaction of all types of monomers to be polymerized, i.e. the conjugated diene compound, the non-conjugated olefin compound, the aromatic vinyl compound, and other monomers, and preferably the conjugated diene compound, the non-conjugated olefin compound, and the aromatic vinyl compound, to polymerize them. The polymerization step in multiple stages is a step of first causing reaction of the whole or part of one or two types of monomers to form a polymer (first polymerization stage) and then performing one or more stages (second to last polymerization stages) in which the remaining types of monomers and/or the balance of the one or two types of monomers is added to polymerize them. In particular, the polymerization step in the production of the multicomponent copolymer is preferably performed in multiple stages.

In the polymerization step, it is preferable to perform a step (first step) of mixing a first monomer material containing at least the aromatic vinyl compound and a polymerization catalyst to obtain a polymerization mixture, and a step (second step) of introducing, into the polymerization mixture, a second monomer material containing at least one selected from the group consisting of the conjugated diene compound, the non-conjugated olefin compound, and the aromatic vinyl compound. Further preferably, the first monomer material does not contain the conjugated diene compound and the second monomer material contains the conjugated diene compound.

The first monomer material used in the first step may contain the non-conjugated olefin compound in addition to the aromatic vinyl compound. The first monomer material may contain the whole or part of the aromatic vinyl compound used. The non-conjugated olefin compound is contained in at least one of the first monomer material and the second monomer material.

The first step is preferably performed in an atmosphere of inert gas, preferably nitrogen gas or argon gas, in a reactor. The temperature (reaction temperature) in the first step is not limited, but is preferably in a range of -100 °C to 200 °C as an example, and may be approximately room temperature. The pressure in the first step is not limited, but is preferably in a range of 0.1 MPa to 10.0 MPa in order to sufficiently incorporate the aromatic vinyl compound into the polymerization reaction system. The time (reaction time) in the first step may be selected as appropriate depending on conditions such as the polymerization catalyst type and the reaction temperature. For example, in the case where the reaction temperature is 25 °C to 80 °C, the reaction time is preferably in a range of 5 min to 500 min.

The polymerization method for obtaining the polymerization mixture in the first step may be any method such as solution polymerization, suspension polymerization, liquid phase bulk polymerization, emulsion polymerization, gas phase polymerization, or solid phase polymerization. In the case of using a solvent in the polymerization reaction, any solvent that is inactive in the polymerization reaction can be used. Examples include toluene, cyclohexane, and normal hexane.

The second monomer material used in the second step is preferably composed of: only the conjugated diene compound; only the conjugated diene compound and the non-conjugated olefin compound; only the conjugated diene compound and the aromatic vinyl compound; or the conjugated diene compound, the non-conjugated olefin compound, and the aromatic vinyl compound. In the case where the second monomer material contains at least one selected from the group consisting of the non-conjugated olefin compound and the aromatic vinyl compound besides the conjugated diene compound, these monomer materials may be mixed together with a solvent or the like beforehand, and then introduced into the polymerization mixture. Alternatively, each monomer material may be introduced in an individual state. The monomer materials may be added simultaneously or sequentially. The method of introducing the second monomer material into the polymerization mixture in the second step is not limited, but preferably each monomer material is continuously added to the polymerization mixture while controlling the flow rate (i.e. metering). In the case of using such a monomer material (e.g. ethylene as the non-conjugated olefin compound under the conditions of room temperature and ordinary pressure) that is gas under the conditions of the polymerization reaction system, the monomer material can be introduced into the polymerization reaction system at predetermined pressure.

The second step is preferably performed in an atmosphere of inert gas, preferably nitrogen gas or argon gas. The temperature (reaction temperature) in the second step is not limited, but is preferably in a range of -100 °C to 200 °C as an example, and may be approximately room temperature. When the reaction temperature is increased, the selectivity of cis-1,4 bond in the conjugated diene unit may decrease. The pressure in the second step is not limited, but is preferably in a range of 0.1 MPa to 10.0 MPa in order to sufficiently incorporate the monomer(s) such as the conjugated diene compound into the polymerization reaction system. The time (reaction time) in the second step may be selected as appropriate depending on conditions such as the polymerization catalyst type and the reaction temperature. For example, the reaction time is preferably in a range of 0.1 hr to 10 days.

In the second step, the polymerization reaction may be terminated using a terminator such as methanol, ethanol, or isopropanol.

The coupling step is a step of performing reaction (coupling reaction) to modify at least part (for example, a terminal end) of a polymer chain of the multicomponent copolymer obtained in the polymerization step, using a coupling agent and the like. The coupling step is preferably performed when the polymerization reaction has reached 100 %. The

coupling step thus performed can increase the number-average molecular weight (Mn) of the multicomponent copolymer.

The coupling agent used in the coupling reaction is not limited, and may be selected as appropriate depending on the intended use. Examples include: tin-containing compounds such as bis(maleic acid-1-octadecyl)dioctyltin (IV); isocyanate compounds such as 4,4'-diphenylmethane diisocyanate; and alkoxysilane compounds such as glycidylpropyltrimethoxysilane. These coupling agents may be used alone or in combination of two or more thereof. Of these, bis(maleic acid-1-octadecyl)dioctyltin (IV) is preferable from the viewpoint of improving reaction efficiency and reducing gel formation.

The cleaning step is a step of cleaning the multicomponent copolymer obtained in the polymerization step or the coupling step. The cleaning step can favorably reduce the catalyst residue in the multicomponent copolymer. The medium used in the cleaning is not limited, and may be selected as appropriate depending on the intended use. Examples include solvents such as methanol, ethanol, and isopropanol. An acid (such as hydrochloric acid, sulfuric acid, nitric acid) may be added to these solvents, when using a Lewis acid-derived catalyst as the polymerization catalyst. The amount of the acid added is preferably 15 mol% or less with respect to the solvent, from the viewpoint of preventing the acid from remaining in the multicomponent copolymer and adversely affecting the reaction during kneading and vulcanization.

The polymerization step is preferably performed in the presence of a first polymerization catalyst composition, a second polymerization catalyst composition, a third polymerization catalyst composition, or a fourth polymerization catalyst composition described below. The first polymerization catalyst composition, the second polymerization catalyst composition, the third polymerization catalyst composition, and the fourth polymerization catalyst composition will be described below.

- First polymerization catalyst composition -

The first polymerization catalyst composition will be described below.

The first polymerization catalyst composition is, for example, a polymerization catalyst composition containing:

a component (A1): a rare-earth element compound or a reaction product of the rare-earth element compound and a Lewis base, the rare-earth element compound or the reaction product having no bond between the rare-earth element and carbon; and

a component (B1): at least one selected from the group consisting of an ionic compound (B1-1) consisting of a non-coordinating anion and a cation, an aluminoxane (B1-2), and at least one type of halogen compound (B1-3) from among a Lewis acid, a complex compound of a metal halide and a Lewis base, and an organic compound containing an active halogen.

In the case where the first polymerization catalyst composition contains at least one selected from the group consisting of the ionic compound (B1-1) and the halogen compound (B1-3), the polymerization catalyst composition further contains

a component (C1): an organic metal compound represented by the following general formula (I):

$$YR^1_aR^2_bR^3_c \ldots \qquad (I)$$

(where Y is a metal selected from groups 1, 2, 12, and 13 in the periodic table, $R^1$ and $R^2$ are each a monovalent hydrocarbon group having a carbon number of 1 to 10 or a hydrogen atom, $R^3$ is a monovalent hydrocarbon group having a carbon number of 1 to 10, $R^1$, $R^2$, and $R^3$ may be the same or different, a is 1 and b and c are 0 in the case where Y is a metal selected from group 1 in the periodic table, a and b are 1 and c is 0 in the case where Y is a metal selected from groups 2 and 12 in the periodic table, and a, b, and c are 1 in the case where Y is a metal selected from group 13 in the periodic table).

Since the ionic compound (B1-1) and the halogen compound (B1-3) do not contain carbon atoms to be supplied to the component (A1), these compounds need the component (C1) as a source for supplying carbon to the component (A1). Even in the case where the polymerization catalyst composition contains the aluminoxane (B1-2), the polymerization catalyst composition can contain the component (C1). The first polymerization catalyst composition may also contain one or more other components, such as a co-catalyst, contained in ordinary rare-earth element compound-based polymerization catalyst compositions.

The concentration of the component (A1) contained in the first polymerization catalyst composition in the polymerization reaction system is preferably in a range of 0.1 mol/l to 0.0001 mol/l.

The polymerization catalyst composition preferably contains an additive (D1) that can be an anionic ligand.

The component (A1) used in the first polymerization catalyst composition is a rare-earth element compound or a reaction product of the rare-earth element compound and a Lewis base. The rare-earth element compound or the

reaction product of the rare-earth element compound and the Lewis base does not have a bond of the rare-earth element with carbon. In the case where the rare-earth element compound or the reaction product does not have a rare-earth element-carbon bond, the compound is stable and easy to handle. Herein, the rare-earth element compound is a compound containing a rare-earth element (M), namely, a lanthanoid element composed of any of the elements with atomic numbers 57 to 71 in the periodic table, or scandium or yttrium.

Specific examples of the lanthanoid element include lanthanum, cerium, praseodymium, neodymium, promethium, samarium, europium, gadolinium, terbium, dysprosium, holmium, erbium, thulium, ytterbium, and lutetium. These components (A1) may be used alone or in combination of two or more thereof.

In the rare-earth element compound, the rare-earth metal is preferably a divalent or trivalent salt or a complex compound, and more preferably a rare-earth element compound containing one or more ligands selected from a hydrogen atom, a halogen atom, and an organic compound residue. Furthermore, the rare-earth element compound or the reaction product of the rare-earth element compound and the Lewis base is preferably represented by the following general formula (II) or general formula (III):

$$M^{11}X^{11}{}_{2}\cdot L^{11}w \ ... \qquad (II)$$

$$M^{11}X^{11}{}_{3}\cdot L^{11}w \ ... \qquad (III)$$

(where $M^{11}$ is a lanthanoid element, scandium, or yttrium, $X^{11}$ are each independently a hydrogen atom, a halogen atom, an alkoxy group, a thiolate group, an amino group, a silyl group, an aldehyde residue, a ketone residue, a carboxylic acid residue, a thiocarboxylic acid residue, or a phosphorous compound residue, $L^{11}$ is a Lewis base, and w is 0 to 3).

Examples of the group (ligand) binding to the rare earth element of the rare earth element compound include a hydrogen atom, a halogen atom, an alkoxy group (a group obtained by removing hydrogen from a hydroxyl group of alcohol, and forming a metal alkoxide), a thiolate group (a group obtained by removing hydrogen from a thiol group of a thiol compound, and forming a metal thiolate), an amino group (a group obtained by removing one hydrogen atom binding to a nitrogen atom of ammonia, a primary amine, or a secondary amine, and forming a metal amide), a silyl group, an aldehyde residue, a ketone residue, a carboxylic acid residue, a thiocarboxylic acid residue, and a phosphorus compound residue. Specific examples include: a hydrogen atom; aliphatic alkoxy groups such as a methoxy group, an ethoxy group, a propoxy group, an n-butoxy group, an isobutoxy group, a sec-butoxy group, and a tert-butoxy group; aromatic alkoxy groups such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group; aliphatic thiolate groups such as a thiomethoxy group, a thioethoxy group, a thiopropoxy group, a thio-n-butoxy group, a thioisobutoxy group, a thio-sec-butoxy group, and a thiotert-butoxy group; arylthiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-neopentylthiophenoxy group, a 2-isopropyl-6-neopentylthiophenoxy group, and a 2,4,6-triisopropylthiophenoxy group; aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tri-tert-butylphenylamino group; bistrialkylsilylamino groups such as a bistrimethylsilylamino group; silyl groups such as a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group; and halogen atoms such as a fluorine atom, a chlorine atom, a bromine atom, and an iodine atom. Specific examples also include: residues of aldehydes such as salicylaldehyde, 2-hydroxy-1-naphthaldehyde, and 2-hydroxy-3-naphthaldehyde; residues of hydroxyphenones such as 2'-hydroxyacetophenone, 2'-hydroxybutyrophenone, and 2'-hydroxypropiophenone; residues of diketones such as acetylacetone, benzoylacetone, propionylacetone, isobutylacetone, valerylacetone, and ethylacetylacetone; residues of carboxylic acids such as isovaleric acid, capric acid, octanoic acid, lauric acid, myristic acid, palmitic acid, stearic acid, isostearic acid, oleic acid, linoleic acid, cyclopentanecarboxylic acid, naphthenic acid, ethylhexanoic acid, pivalic acid, Versatic acid [product name, made by Shell Chemicals Japan, a synthetic acid formed from a mixture of C10 monocarboxylic acid isomers], phenylacetic acid, benzoic acid, 2-naphthoic acid, maleic acid, and succinic acid; residues of thiocarboxylic acids such as hexanethioic acid, 2,2-dimethylbutanethioic acid, decanethioic acid, and thiobenzoic acid; residues of phosphoric acid esters such as dibutyl phosphate, dipentyl phosphate, dihexyl phosphate, diheptyl phosphate, dioctyl phosphate, bis(2-ethylhexyl) phosphate, bis(1-methylheptyl) phosphate, dilauryl phosphate, dioleyl phosphate, diphenyl phosphate, bis(p-nonylphenyl) phosphate, bis(polyethylene glycol-p-nonylphenyl) phosphate, (butyl)(2-ethylhexyl) phosphate, (1-methylheptyl)(2-ethylhexyl) phosphate, and (2-ethylhexyl)(p-nonylphenyl) phosphate; residues of phosphonic acid esters such as monobutyl 2-ethylhexylphosphonate, mono-2-ethylhexyl 2-ethylhexylphosphonate, mono-2-ethylhexyl phenylphosphonate, mono-p-nonylphenyl 2-ethylhexylphosphonate, mono-2-ethylhexyl phosphonate, mono-1-methylheptyl phosphonate, and mono-p-nonylphenyl phosphonate; and residues

of phosphinic acids such as dibutylphosphinic acid, bis(2-ethylhexyl)phosphinic acid, bis(1-methylheptyl)phosphinic acid, dilaurylphosphinic acid, dioleylphosphinic acid, diphenylphosphinic acid, bis(p-nonylphenyl)phosphinic acid, butyl (2-ethylhexyl)phosphinic acid, (2-ethylhexyl)(1-methylheptyl)phosphinic acid, (2-ethylhexyl)(p-nonylphenyl)phosphinic acid, butylphosphinic acid, 2-ethylhexylphosphinic acid, 1-methylheptylphosphinic acid, oleylphosphinic acid, laurylphosphinic acid, phenylphosphinic acid, and p-nonylphenylphosphinic acid.

These groups (ligands) may be used alone or in combination of two or more thereof.

In the component (A1) used in the first polymerization catalyst composition, examples of the Lewis base reacting with the rare-earth element compound include tetrahydrofuran, diethyl ether, dimethylaniline, trimethylphosphine, lithium chloride, neutral olefins, and neutral diolefins. In the case where the rare-earth element compound reacts with a plurality of Lewis bases (in the case where w is 2 or 3 in the general formulae (II) and (III)), the Lewis bases $L^{11}$ may be the same or different.

Preferably, the rare-earth element compound contains a compound represented by the following general formula (IV):

$$M\text{-}(NQ^1)(NQ^2)(NQ^3) \ldots \qquad (IV)$$

(where M is at least one selected from a lanthanoid element, scandium and yttrium, and $NQ^1$, $NQ^2$, and $NQ^3$ are each an amino group, may be the same or different, and each have an M-N bond).

That is, the compound represented by the general formula (IV) has three M-N bonds. Since the compound has three M-N bonds, the bonds are chemically equivalent to one another. Such a compound is advantageous in that it has a stable structure and is easy to handle.

The amino group represented by NQ ($NQ^1$, $NQ^2$, and $NQ^3$) in the general formula (IV) may be any of: aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tri-tert-butylphenylamino group; and bistrialkylsilylamino groups such as a bistrimethylsilylamino group. Of these, a bistrimethylsilylamino group is preferable.

The component (B1) used in the first polymerization catalyst composition is at least one selected from the group consisting of an ionic compound (B1-1), an aluminoxane (B1-2), and a halogen compound (B1-3). The total content of the component (B1) in the first polymerization catalyst composition is preferably 0.1 times to 50 times mol with respect to the component (A1).

An example of the ionic compound (B1-1) is an ionic compound consisting of a non-coordinating anion and a cation, and capable of reacting with the rare-earth element compound or the reaction product of the rare-earth element compound and a Lewis base as the component (A1) to form a cationic transition metal compound.

Examples of the non-coordinating anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl,pentafluorophenyl)borate, [tris(pentafluorophenyl),phenyl]borate, and tridecahydride-7,8-dicarbaundecaborate.

Examples of the cation include a carbonium cation, an oxonium cation, an ammonium cation, a phosphonium cation, a cycloheptatrienyl cation, and a ferrocenium cation having a transition metal. Specific examples of the carbonium cation include trisubstituted carbonium cations such as a triphenylcarbonium cation and a tri(substituted phenyl)carbonium cation. Specific examples of the tri(substituted phenyl)carbonyl cation include a tri(methylphenyl)carbonium cation and a tri(dimethylphenyl)carbonium cation. Specific examples of the ammonium cation include: trialkylammonium cations such as a trimethylammonium cation, a triethylammonium cation, a tripropylammonium cation, and a tributylammonium cation (e.g. a tri(n-butyl)ammonium cation); N,N-dialkylanilinium cations such as an N,N-dimethylanilinium cation, an N,N-diethylanilinium cation, and an N,N-2,4,6-pentamethylanilinium cation; and dialkylammonium cations such as a diisopropylammonium cation and a dicyclohexylammonium cation. Specific examples of the phosphonium cation include triarylphosphonium cations such as a triphenylphosphonium cation, a tri(methylphenyl)phosphonium cation, and a tri(dimethylphenyl)phosphonium cation.

The ionic compound (B1-1) is preferably a compound obtained by combining a non-coordinating anion and a cation selected from the aforementioned non-coordinating anions and cations. Specifically, N,N-dimethylanilinium tetrakis(pentafluorophenyl)borate, triphenylcarbonium tetrakis(pentafluorophenyl)borate, and the like are preferable. These ionic compounds (B1-1) may be used alone or in combination of two or more thereof. The content of the ionic compound (B1-1) in the first polymerization catalyst composition is preferably 0.1 times to 10 times mol, and more preferably approximately 1 time mol, with respect to the component (A1).

The aluminoxane (B1-2) is a compound obtained by causing an organic aluminum compound to come into contact with a condensation agent, and is, for example, a linear aluminoxane or a cyclic aluminoxane having a repeating unit represented by the general formula: (-A1(R')O-) (where R' is a univalent hydrocarbon group having a carbon number

of 1 to 10, some hydrocarbon groups may be substituted with at least one selected from the group consisting of a halogen atom and an alkoxy group, and the polymerization degree of the repeating unit is preferably 5 or more, and more preferably 10 or more). Specific examples of R' include a methyl group, an ethyl group, a propyl group, and an isobutyl group. Of these, a methyl group is preferable. Examples of the organic aluminum compound used as a raw material for the aluminoxane include trialkylaluminums such as trimethyl aluminum, triethyl aluminum, tributyl aluminum, and triisobutyl aluminum, and mixtures thereof. Trimethyl aluminum is particularly preferable. For example, aluminoxane in which a mixture of trimethyl aluminum and tributyl aluminum is used as a raw material may be preferably used. With regard to the content of the aluminoxane (B1-2) in the first polymerization catalyst composition, the ratio of the aluminum element A1 in the aluminoxane to the rare-earth element M constituting the component (A1), Al/M, is preferably approximately 10 to 1,000.

The halogen compound (B1-3) consists of at least one of Lewis acid, a complex compound of a metal halide and a Lewis base, and an organic compound containing an active halogen, and for example, is capable of reacting with the rare-earth element compound or the reaction product of the rare-earth element compound and a Lewis base as the component (A1) to form a cationic transition metal compound, a halogenated transition metal compound, or a compound having a transition metal center with lack of electric charge. The total content of the halogen compound (B1-3) in the first polymerization catalyst composition is preferably 1 time to 5 times mol with respect to the component (A1).

As the Lewis acid, boron-containing halogen compounds such as $B(C_6F_5)_3$ or aluminum-containing halogen compounds such as $Al(C_6F_5)_3$ can be used. In addition, halogen compounds containing an element belonging to group 3, 4, 5, 6 or 8 in the periodic table can also be used. Preferably, an aluminum halide or an organic metal halide can be used. As the halogen element, chlorine or bromine is preferable.

Specific examples of the Lewis acid include methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, dibutyltin dichloride, aluminum tribromide, antimony trichloride, antimony pentachloride, phosphorus trichloride, phosphorus pentachloride, tin tetrachloride, titanium tetrachloride, and tungsten hexachloride. Of these, diethyl aluminum chloride, ethyl aluminum sesquichloride, ethyl aluminum dichloride, diethyl aluminum bromide, ethyl aluminum sesquibromide, and ethyl aluminum dibromide are particularly preferable.

Examples of the metal halide constituting the complex compound of the metal halide and the Lewis base include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper bromide, copper iodide, silver chloride, silver bromide, silver iodide, gold chloride, gold iodide, and gold bromide. Of these, magnesium chloride, calcium chloride, barium chloride, manganese chloride, zinc chloride, and copper chloride are preferable, and magnesium chloride, manganese chloride, zinc chloride, and copper chloride are particularly preferable.

Examples of the Lewis base constituting the complex compound of the metal halide and the Lewis base include a phosphorus compound, a carbonyl compound, a nitrogen compound, an ether compound, and alcohol. Specific examples include tributyl phosphate, tri-2-ethylhexyl phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionylacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, and lauryl alcohol. Of these, tri-2-ethylhexyl phosphate, tricresyl phosphate, acetylacetone, 2-ethylhexanoic acid, versatic acid, 2-ethylhexyl alcohol, 1-decanol, and lauryl alcohol are preferable.

The Lewis base is allowed to react with the metal halide preferably at a ratio of 0.01 mol to 30 mol and more preferably at a ratio of 0.5 mol to 10 mol, with respect to 1 mol of the metal halide. By using a reaction product of the rare-earth element compound with this Lewis base, the amount of metal remaining in the polymer can be reduced.

An example of the organic compound containing an active halogen is benzyl chloride.

The component (C1) used in the first polymerization catalyst composition is an organic metal compound represented by the following general formula (I):

$$YR^1{}_aR^2{}_bR^3{}_c \ldots \qquad (I)$$

(where Y is a metal selected from groups 1, 2, 12, and 13 in the periodic table, $R^1$ and $R^2$ are each a monovalent hydrocarbon group having a carbon number of 1 to 10 or a hydrogen atom, $R^3$ is a monovalent hydrocarbon group

having a carbon number of 1 to 10, $R^1$, $R^2$, and $R^3$ may be the same or different, a is 1 and b and c are 0 in the case where Y is a metal selected from group 1 in the periodic table, a and b are 1 and c is 0 in the case where Y is a metal selected from groups 2 and 12 in the periodic table, and a, b, and c are 1 in the case where Y is a metal selected from group 13 in the periodic table). The component (C) is preferably an organic aluminum compound represented by the following general formula (V):

$AlR^1R^2R^3$ ... (V)

(where $R^1$ and $R^2$ are each a monovalent hydrocarbon group having a carbon number of 1 to 10 or a hydrogen atom, $R^3$ is a monovalent hydrocarbon group having a carbon number of 1 to 10, and $R^1$, $R^2$, and $R^3$ may be the same or different).

Examples of the organic aluminum compound represented by the general formula (V) include: trimethyl aluminum, triethyl aluminum, tri-n-propylaluminum, triisopropylaluminum, tri-n-butyl aluminum, triisobutyl aluminum, tri-t-butyl aluminum, tripentylaluminum, trihexylaluminum, tricyclohexylaluminum, and trioctylaluminum; diethyl aluminum hydride, di-n-propylaluminum hydride, di-n-butyl aluminum hydride, diisobutyl aluminum hydride, dihexylaluminum hydride, diisohexylaluminum hydride, dioctylaluminum hydride, and diisooctylaluminum hydride; and ethyl aluminum dihydride, n-propylaluminum dihydride, and isobutyl aluminum dihydride. Of these, triethyl aluminum, triisobutyl aluminum, diethyl aluminum hydride, and diisobutyl aluminum hydride are preferable. The aforementioned organic metal compounds as the component (C1) may be used alone or in combination of two or more thereof.

The content of the organic metal compound in the first polymerization catalyst composition is preferably 1 time to 50 times mol, and more preferably approximately 10 times mol, with respect to the component (A1).

The addition of the additive (D1) that can be an anionic ligand is preferable because it exhibits the effect of enabling the synthesis of the multicomponent copolymer with a higher content of cis-1,4 bonds at a high yield.

The additive (D1) is not limited, as long as it is exchangeable with the amino group of the component (A1). The additive (D1) preferably has any of an OH group, an NH group, and an SH group.

Specific examples of a compound having an OH group include aliphatic alcohol and aromatic alcohol. Specific examples of such a compound include 2-ethyl-1-hexanol, dibutylhydroxytoluene, alkylated phenol, 4,4'-thiobis(6-t-butyl-3-methylphenol), 4,4'-butylidenebis(6-t-butyl-3-methylphenol), 2,2'-methylenebis(4-methyl-6-t-butylphenol), 2,2'-methylenebis(4-ethyl-6-t-butylphenol), 2,6-di-t-butyl-4-ethylphenol, 1,1,3-tris(2-methyl-4-hydroxy-5-t-butylphenyl)butane, n-octadecyl-3-(4-hydroxy-3,5-di-t-butylphenyl)propionate, tetrakis[methylene-3-(3,5-di-t-butyl-4-hydroxyphenyl)propionate]methane, dilaurylthiodipropionate, distearylthiodipropionate, and dimyristylylthiodipropionate, but the examples are not limited thereto. For example, hindered phenol-based compounds may include triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,4-bis(n-octylthio)-6-(4-hydroxy-3,5-di-t-butylanilino)-1,3,5-triazine, pentaerythryl-tetrakis[3-(3,5-di-t-butyl-4-hydroxyphenyl)propionate], 2,2-thio-diethylene-bis[3-(3,5-di-t-butyl-4-hydroxyphenyl)propionate], octadecyl-3-(3,5-di-t-butyl-4-hydroxyphenyl)propionate, N,N'-hexamethylene bis(3,5-di-t-butyl-4-hydroxy-hydrocinnamamide), 3,5-di-t-butyl-4-hydroxybenzyl phosphonate-diethyl ester, 1,3,5-trimethyl-2,4,6-tris(3,5-di-t-butyl-4-hydroxybenzyl)benzene, tris(3,5-di-t-butyl-4-hydroxybenzyl)-isocyanurate, octylated diphenylamine, and 2,4-bis[(octylthio)methyl]-o-cresol. An example of a hydrazine-based compound is N,N'-bis[3-(3,5-di-t-butyl-4-hydroxyphenyl)propionyl]hydrazine.

Examples of a compound having an NH group include primary amines and secondary amines, such as alkylamine or arylamine. Specific examples include dimethylamine, diethylamine, pyrrole, ethanolamine, diethanolamine, dicyclohexylamine, N,N'-dibenzylethylenediamine, and bis(2-diphenylphosphinophenyl)amine.

Examples of a compound having an SH group include aliphatic thiol, aromatic thiol, and compounds represented by the following general formulae (VI) and (VII):

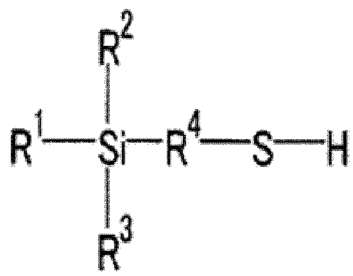

... (VI)

(where $R^1$, $R^2$ and $R^3$ are each independently represented by $O\text{-}C_jH_{2j+1}$, $-(O\text{-}CkH_{2k}\text{-})_a\text{-}O\text{-}C_mH_{2m+1}$, or $C_nH_{2n+1}$, j, m, and n are each independently an integer of 0 to 12, k and a are each independently an integer of 1 to 12, and $R^4$ is a linear, branched or cyclic, saturated or unsaturated alkylene group, cycloalkylene group, cycloalkylalkylene group, cycloalkenylalkylene group, alkenylene group, cycloalkenylene group, cycloalkylalkenylene group, cycloalkenylalkenylene

group, arylene group, or aralkylene group having a carbon number of 1 to 12).

Specific examples of the compound represented by the general formula (VI) include 3-mercaptopropyltrimethoxysilane, 3-mercaptopropyltriethoxysilane, 3-mercaptopropylmethyldimethoxysilane, (mercaptomethyl)dimethylethoxysilane, and mercaptomethyltrimethoxysilane.

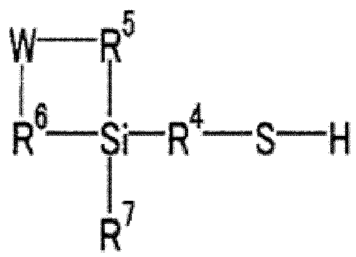

$\cdots$ (VII)

(where W is represented by $-NR^8-$, -O-, or $CR^9R^{10}-$ (where $R^8$ and $R^9$ are $-C_pH_{2p+1}$, $R^{10}$ is $-C_qH_{2q+1}$, and p and q are each independently an integer of 0 to 20), $R^5$ and $R^6$ are each independently represented by $M-C_rH_{2r}-$ (where M is -O- or $CH_2$-, and r is an integer of 1 to 20), $R^7$ is represented by $-O-C_jH_{2j+1}$, $-(O-C_kH_{2k}-)_a-O-C_mH_{2m+1}$, or $C_nH_{2n+1}$, j, m and n are each independently an integer of 0 to 12, k and a are each independently an integer of 1 to 12, and $R^4$ is a linear, branched or cyclic, saturated or unsaturated alkylene group, cycloalkylene group, cycloalkylalkylene group, cycloalkenylalkylene group, alkenylene group, cycloalkenylene group, cycloalkylalkenylene group, cycloalkenylalkenylene group, arylene group, or aralkylene group having a carbon number of 1 to 12).

Specific examples of the compound represented by the general formula (VII) include 3-mercaptopropyl(ethoxy)-1,3-dioxa-6-methylaza-2-silacyclooctane, 3-mercaptopropyl(ethoxy)-1,3-dioxa-6-butylaza-2-silacyclooctane, and 3-mercaptopropyl (ethoxy)-1,3-dioxa-6-dodecylaza-2-silacyclooctane.

As the additive (D1), an anionic tridentate ligand precursor represented by the following general formula (VIII) can be preferably used:

$$E^1-T^1-X-T^2-E^2 \ldots \qquad (VIII)$$

(where X is an anionic electron-donating group containing a coordinating atom selected from the atoms of group 15 in the periodic table, $E^1$ and $E^2$ are each independently a neutral electron-donating group containing a coordinating atom selected from the atoms of groups 15 and 16 in the periodic table, and $T^1$ and $T^2$ are crosslinking groups that crosslink X with $E^1$ and $E^2$, respectively).

The additive (D1) is preferably added in an amount of 0.01 mol to 10 mol and more preferably added in an amount of 0.1 mol to 1.2 mol, to 1 mol of the rare-earth element compound. If the additive amount is 0.1 mol or more, the polymerization reaction of monomers progresses sufficiently. It is preferable to set the amount of the additive (D1) to be equal to the amount of the rare-earth element compound (1.0 mol), but the additive (D1) may be added in an excessive amount. An additive amount of 1.2 mol or less is preferable because the loss of the reagent is little.

In the general formula (VIII), the neutral electron-donating groups $E^1$ and $E^2$ are groups containing coordinating atoms selected from groups 15 and 16 in the periodic table. $E^1$ and $E^2$ may be the same group or different groups. Examples of the coordinating atom include nitrogen N, phosphorus P, oxygen O, and sulfur S. Of these, P is preferable.

When the coordinating atom contained in $E^1$ and $E^2$ is P, examples of the neutral electron-donating group $E^1$ or $E^2$ include: diarylphosphino groups such as a diphenylphosphino group and a ditolylphosphino group; dialkylphosphino groups such as a dimethylphosphino group and a diethylphosphino group; and alkylarylphosphino groups such as a methylphenylphosphino group. Of these, a diarylphosphino group is preferable.

When the coordinating atom contained in $E^1$ and $E^2$ is N, examples of the neutral electron-donating group $E^1$ or $E^2$ include: dialkylamino groups and bis(trialkylsilyl)amino groups such as a dimethylamino group, a diethylamino group, and a bis(trimethylsilyl)amino group; diarylamino groups such as a diphenylamino group; and alkylarylamino groups such as a methylphenylamino group.

When the coordinating atom contained in $E^1$ and $E^2$ is O, examples of the neutral electron-donating group $E^1$ or $E^2$ include: alkoxy groups such as a methoxy group, an ethoxy group, a propoxy group, and a butoxy group; and aryloxy groups such as a phenoxy group and a 2,6-dimethylphenoxy group.

When the coordinating atom contained in the above $E^1$ and $E^2$ is S, examples of the neutral electron-donating group $E^1$ or $E^2$ include: alkylthio groups such as a methylthio group, an ethylthio group, a propylthio group, and a butylthio group; and arylthio groups such as a phenylthio group and a tolylthio group.

The anionic electron-donating group X is a group containing a coordinating atom selected from group 15 in the periodic table. Preferred examples of the coordinating atom include phosphorus P and nitrogen N, and the coordinating

atom is more preferably N.

The crosslinking groups $T^1$ and $T^2$ are not limited, as long as they are groups capable of crosslinking X with $E^1$ and $E^2$. An example of such a crosslinking group is an arylene group optionally having a substituent on an aryl ring. $T^1$ and $T^2$ may be the same group or different groups.

Examples of the arylene group include a phenylene group, a naphthylene group, a pyridylene group, and a thienylene group, with a phenylene group and a naphthylene group being preferred. Any given group may be substituted on the aryl ring of the arylene group. Examples of the substituent include: alkyl groups such as a methyl group and an ethyl group; aryl groups such as a phenyl group and a tolyl group; halogen groups such as fluoro, chloro, and bromo; and silyl groups such as a trimethylsilyl group.

A more preferred example of the arylene group is a 1,2-phenylene group.

- Second polymerization catalyst composition -

The second polymerization catalyst composition will be described below. The second polymerization catalyst composition is, for example, a polymerization catalyst composition containing at least one complex selected from the group consisting of a metallocene complex represented by the following general formula (IX), a metallocene complex represented by the following general formula (X), and a half-metallocene cation complex represented by the following general formula (XI):

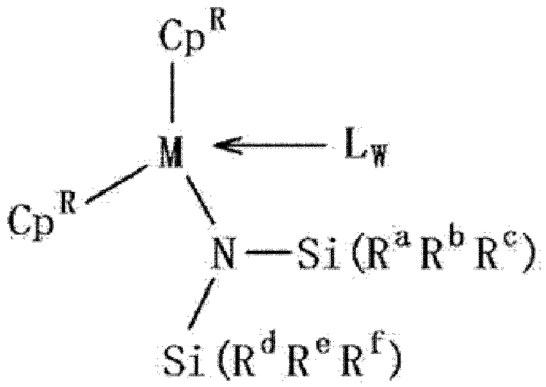

···(IX)

(where M is a lanthanoid element, scandium, or yttrium, $Cp^R$ are each independently an unsubstituted or substituted indenyl, $R^a$ to $R^f$ are each independently a hydrogen atom or an alkyl group having a carbon number of 1 to 3, L is a neutral Lewis base, and w is an integer of 0 to 3),

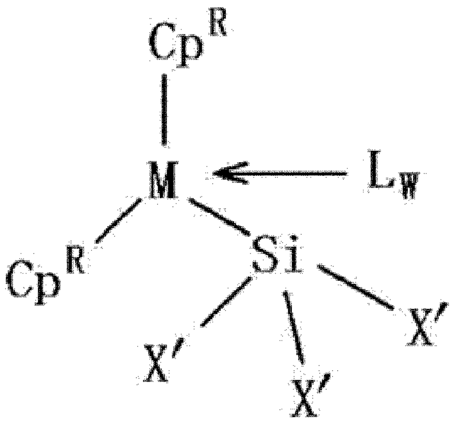

···(X)

(where M is a lanthanoid element, scandium, or yttrium, $Cp^R$ are each independently an unsubstituted or substituted indenyl, X' is a hydrogen atom, a halogen atom, an alkoxide group, a thiolate group, an amino group, a silyl group, or a hydrocarbon group having a carbon number of 1 to 20, L is a neutral Lewis base, and w is an integer of 0 to 3),

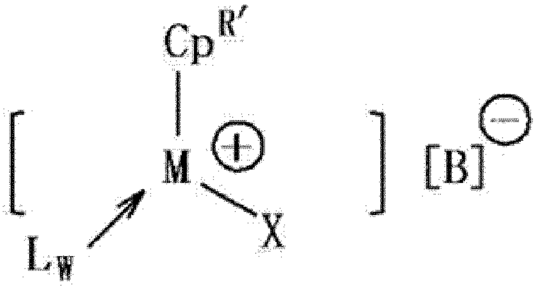

... (XI)

(where M is a lanthanoid element, scandium, or yttrium, $Cp^{R'}$ are each independently an unsubstituted or substituted cyclopentadienyl, indenyl, or fluorenyl, X is a hydrogen atom, a halogen atom, an alkoxide group, a thiolate group, an amino group, a silyl group, or a monovalent hydrocarbon group having a carbon number of 1 to 20, L is a neutral Lewis base, w is an integer of 0 to 3, and $[B]^-$ is a non-coordinating anion).

The second polymerization catalyst composition may further contain one or more other components, such as a co-catalyst, contained in ordinary metallocene complex-containing polymerization catalyst compositions. Herein, the metallocene complex is a complex compound having one or more cyclopentadienyl groups or a derivative thereof bonded to the central metal. In particular, the metallocene complex may be referred to as a half metallocene complex in the case where the central metal has one cyclopentadienyl group or one derivative thereof bonded thereto.

In the polymerization reaction system, the concentration of the complex contained in the second polymerization catalyst composition is preferably in a range of 0.1 mol/L to 0.0001 mol/L.

In the metallocene complex represented by each of the general formulae (IX) and (X), $Cp^R$ is an unsubstituted or substituted indenyl group. $Cp^R$ having an indenyl ring as a basic skeleton may be represented by $C_9H_{7-x}R_x$ or $C_9H_{11-x}R_x$. Here, X is an integer of 0 to 7 or 0 to 11. R is preferably each independently a hydrocarbyl group or a metalloid group. The hydrocarbyl group preferably has a carbon number of 1 to 20, more preferably has a carbon number of 1 to 10, and further preferably has a carbon number of 1 to 8. Preferred examples of the hydrocarbyl group include a methyl group, an ethyl group, a phenyl group, and a benzyl group. Examples of metalloid in the metalloid group include germyl (Ge), stannyl (Sn), and silyl (Si). The metalloid group preferably has a hydrocarbyl group which is the same as the hydrocarbyl group described above. Specific examples of the metalloid group include a trimethylsilyl group. Specific examples of the substituted indenyl include 2-phenyl indenyl and 2-methyl indenyl. Two $Cp^R$ in the formulae (IX) and (X) may be the same or different.

In the half metallocene cation complex represented by the general formula (XI), $Cp^{R'}$ is an unsubstituted or substituted cyclopentadienyl, indenyl, or fluorenyl, with an unsubstituted or substituted indenyl being preferred.

In the general formula (XI), $Cp^{R'}$ having a cyclopentadienyl ring as a basic skeleton is represented by $C_5H_{5-x}R_x$. Here, X is an integer of 0 to 5. R is preferably each independently a hydrocarbyl group or a metalloid group. The hydrocarbyl group preferably has a carbon number of 1 to 20, more preferably has a carbon number of 1 to 10, and further preferably has a carbon number of 1 to 8. Preferred examples of the hydrocarbyl group include a methyl group, an ethyl group, a phenyl group, and a benzyl group. Examples of metalloid in the metalloid group include germyl (Ge), stannyl (Sn), and silyl (Si). The metalloid group preferably has a hydrocarbyl group which is the same as the hydrocarbyl group described above. Specific examples of the metalloid group include a trimethylsilyl group. $Cp^{R'}$ having a cyclopentadienyl ring as a basic skeleton is exemplified by the following formula:

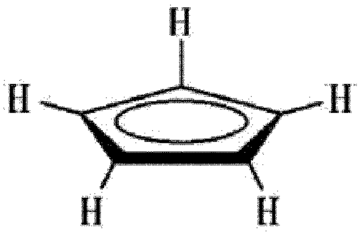
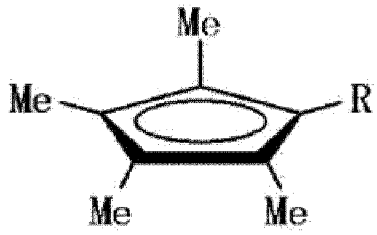

(where R is a hydrogen atom, a methyl group, or an ethyl group).

In the general formula (XI), $Cp^{R'}$ having the indenyl ring as a basic skeleton is similarly defined as $Cp^R$ of the general formulas (IX) and (X), and preferred examples are the same as above.

In the general formula (XI), $Cp^{R'}$ having the fluorenyl ring as a basic skeleton may be represented by $C_{13}H_{9-x}R_x$ or $C_{13}H_{17-x}R_x$. Here, X is an integer of 0 to 9 or 0 to 17. R is preferably each independently a hydrocarbyl group or a metalloid group. The hydrocarbyl group preferably has a carbon number of 1 to 20, more preferably has a carbon number

of 1 to 10, and further preferably has a carbon number of 1 to 8. Preferred examples of the hydrocarbyl group include a methyl group, an ethyl group, a phenyl group, and a benzyl group. Examples of metalloid in the metalloid group include germyl Ge, stannyl Sn, and silyl Si. The metalloid group preferably has a hydrocarbyl group which is the same as the hydrocarbyl group described above. A specific example of the metalloid group is a trimethylsilyl group.

The central metal M in the general formulae (IX), (X), and (XI) is a lanthanoid element, scandium, or yttrium. Lanthanoid elements include 15 elements with atomic numbers 57 to 71, any of which may be used. Preferred examples of the central metal M include samarium Sm, neodymium Nd, praseodymium Pr, gadolinium Gd, cerium Ce, holmium Ho, scandium Sc, and yttrium Y.

The metallocene complex represented by the general formula (IX) includes a silyl amide ligand [$-N(SiR_3)_2$]. Groups represented by R ($R^a$ to $R^f$ in the general formula (IX)) in the silyl amide ligand are each independently a hydrogen atom or an alkyl group having a carbon number of 1 to 3, and at least one of $R^a$ to $R^f$ is preferably a hydrogen atom. As a result of at least one of $R^a$ to $R^f$ being a hydrogen atom, the catalyst can be synthesized easily, and the height around silicon can be reduced, facilitating introduction of the non-conjugated olefin or the aromatic vinyl compound. From the same perspective, it is more preferred that at least one of $R^a$ to $R^c$ is a hydrogen atom and at least one of $R^d$ to $R^f$ is a hydrogen atom. A methyl group is preferred as the alkyl group.

The metallocene complex represented by the general formula (X) includes a silyl ligand [$-SiX'_3$]. X' in the silyl ligand [$-SiX'_3$] is a group defined in the same way as X in the general formula (XI) described below,, and preferred examples are the same as those of X in the general formula (XI).

In the general formula (XI), X is a group selected from the group consisting of a hydrogen atom, a halogen atom, an alkoxy group, a thiolate group, an amino group, a silyl group, and a monovalent hydrocarbon group having a carbon number of 1 to 20. The halogen atom represented by X may be any of a fluorine atom, a chlorine atom, a bromine atom, and an iodine atom, with a chlorine atom or a bromine atom being preferred.

In the general formula (XI), the alkoxy group represented by X may be any of: aliphatic alkoxy groups such as a methoxy group, an ethoxy group, a propoxy group, an n-butoxy group, an isobutoxy group, a sec-butoxy group, and a tert-butoxy group; and aryl oxide groups such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group, with a 2,6-di-tert-butylphenoxy group being preferred.

In the general formula (XI), the thiolate group represented by X may be any of: aliphatic thiolate groups such as a thiomethoxy group, a thioethoxy group, a thiopropoxy group, a thio-n-butoxy group, a thioisobutoxy group, a thio-sec-butoxy group, and a thio-tert-butoxy group; and aryl thiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-neopentylthiophenoxy group, a 2-isopropyl-6-neopentylthiophenoxy group, and a 2,4,6-triisopropylthiophenoxy group, with a 2,4,6-triisopropylthiophenoxy group being preferred.

In the general formula (XI), the amino group represented by X may be any of: aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tri-tert-butylphenylamino group; and bistrialkylsilylamino groups such as a bistrimethylsilylamino group, with a bistrimethylsilylamino group being preferred.

In the general formula (XI), the silyl group represented by X may be any of a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group, with a tris(trimethylsilyl)silyl group being preferred.

In the general formula (XI), specific examples of the monovalent hydrocarbon group having a carbon number of 1 to 20 represented by X include: linear or branched aliphatic hydrocarbon groups such as a methyl group, an ethyl group, an n-propyl group, an isopropyl group, an n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; aralkyl groups such as a benzyl group; and hydrocarbon groups such as a trimethylsilylmethyl group and a bistrimethylsilylmethyl group each containing a silicon atom, with a methyl group, an ethyl group, an isobutyl group, a trimethylsilylmethyl group, and the like being preferred.

In the general formula (XI), X is preferably a bistrimethylsilylamino group or a monovalent hydrocarbon group having a carbon number of 1 to 20.

In the general formula (XI), examples of the non-coordinating anion represented by $[B]^-$ include tetravalent boron anions. Specific examples of the tetravalent boron anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (tripheyl, pentafluorophenyl)borate, [tris(pentafluorophenyl), phenyl]borate, and tridecahydride-7,8-dicarbaundecaborate, with tetrakis(pentafluorophenyl)borate being preferred.

The metallocene complexes represented by the general formulae (IX) and (X) and the half metallocene cation

complex represented by the general formula (XI) may include zero to three, preferably zero or one neutral Lewis base L. Examples of the neutral Lewis base L include tetrahydrofuran, diethyl ether, dimethylaniline, trimethylphosphine, lithium chloride, neutral olefins, and neutral diolefins. In the case where the complex includes a plurality of neutral Lewis bases L, the neutral Lewis bases L may be the same or different.

The metallocene complexes represented by the general formulae (IX) and (X) and the half metallocene cation complex represented by the general formula (XI) may be each present as a monomer or as a dimer or a multimer having two or more monomers.

The metallocene complex represented by the general formula (IX) can be obtained by, for example, subjecting a lanthanoid trishalide, a scandium trishalide, or a yttrium trishalide to reaction in a solvent with a salt of indenyl (for example, a potassium salt or a lithium salt) and a salt of bis(trialkylsilyl) amine (for example, a potassium salt or a lithium salt). The reaction temperature may be set to approximately room temperature, and thus the complex can be produced in mild conditions. The reaction time is not limited, but may be about several hours to several tens of hours. The reaction solvent is not limited, but is preferably a solvent that dissolves a raw material and a product. For example, toluene may be used. A reaction example for obtaining the metallocene complex represented by the general formula (IX) is given below.

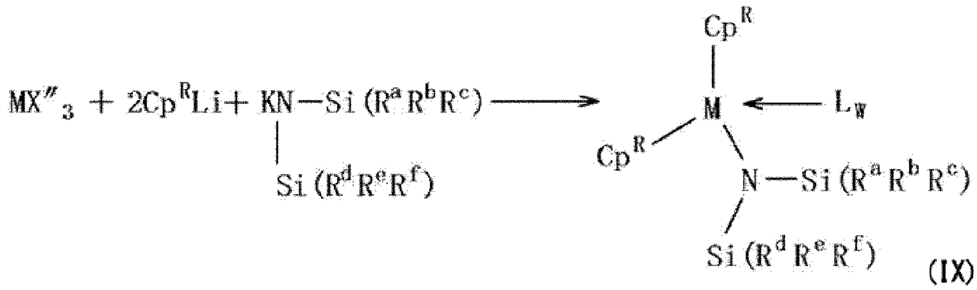

(IX)

(where X" represents a halide).

The metallocene complex represented by the general formula (X) can be obtained by, for example, subjecting a lanthanoid trishalide, a scandium trishalide, or a yttrium trishalide to reaction in a solvent with a salt of indenyl (for example, a potassium salt or a lithium salt) and a salt of silyl (for example, a potassium salt or a lithium salt). The reaction temperature may be set to approximately room temperature, and thus the complex can be produced in mild conditions. The reaction time is not limited, but may be about several hours to several tens of hours. The reaction solvent is not limited, but is preferably a solvent that dissolves a raw material and a product. For example, toluene may be used. A reaction example for obtaining the metallocene complex represented by the general formula (X) is given below.

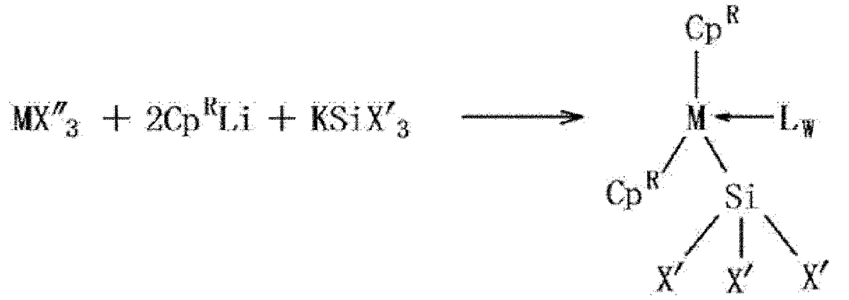

··· (X)

(where X" represents a halide).

The half metallocene cation complex represented by the general formula (XI) can be obtained by, for example, the following reaction.

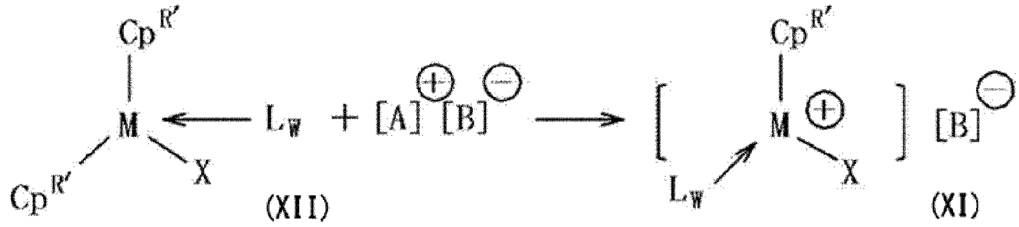

In a compound represented by the general formula (XII), M is a lanthanoid element, scandium, or yttrium, $Cp^{R'}$ are each independently an unsubstituted or substituted cyclopentadienyl, indenyl, or fluorenyl, X is a hydrogen atom, a halogen atom, an alkoxy group, a thiolate group, an amino group, a silyl group, or a monovalent hydrocarbon group having a carbon number of 1 to 20, L is a neutral Lewis base, and w is an integer of 0 to 3. In an ionic compound represented by the formula $[A]^+[B]^-$, $[A]^+$ is a cation, and $[B]^-$ is a non-coordinating anion.

Examples of the cation represented by $[A]^+$ include a carbonium cation, an oxonium cation, an amine cation, a phosphonium cation, a cycloheptatrienyl cation, and a ferrocenium cation containing a transition metal. Examples of the carbonium cation include trisubstituted carbonium cations such as a triphenylcarbonium cation and a tri(substituted phenyl)carbonium cation. Specific examples of the tri(substituted phenyl)carbonium cation include a tri(methylphenyl)carbonium cation. Examples of the amine cation include: trialkylammonium cations such as a trimethylammonium cation, a triethylammonium cation, a tripropylammonium cation, and a tributylammonium cation; N,N-dialkylanilinium cations such as a N,N-dimethylanilinium cation, a N,N-diethylanilinium cation, and a N,N,2,4,6-pentamethylanilinium cation; and dialkylammonium cations such as a diisopropylammonium cation and a dicyclohexylammonium cation. Examples of the phosphonium cation include triarylphosphonium cations such as a triphenylphosphonium cation, a tri(methylphenyl)phosphonium cation, and a tri(dimethylphenyl)phosphonium cation. Of these cations, a N,N-dialkylanilinium cation or a carbonium cation is preferred, with a N,N-dialkylanilinium cation being particularly preferred.

The ionic compound represented by the general formula $[A]^+[B]^-$ used in the reaction is a compound obtained by combining a non-coordinating anion and a cation selected from the aforementioned non-coordinating anions and cations, with N,N-dimethylanilinium tetrakis(pentafluorophenyl)borate and triphenylcarbonium tetrakis(pentafluorophenyl)borate being preferred. The ionic compound represented by the general formula $[A]^+[B]^-$ is added in an amount of preferably 0.1 times to 10 times mol and more preferably about 1 time mol, with respect to the metallocene complex. When the half metallocene cation complex represented by the general formula (XI) is used in polymerization reaction, the half metallocene cation complex represented by the general formula (XI) may be directly supplied to the polymerization reaction system, or the compound represented by the general formula (XII) and the ionic compound represented by the general formula $[A]^+[B]^-$ used in the reaction may be separately supplied to the polymerization reaction system, to thereby form the half metallocene cation complex represented by the general formula (XI) in the reaction system. The half metallocene cation complex represented by the general formula (XI) may be formed in the reaction system by using the metallocene complex represented by the general formula (IX) or (X) and the ionic compound represented by the general formula $[A]^+[B]^-$ in combination.

The structures of the metallocene complexes represented by the general formulae (IX) and (X) and the half metallocene cation complex represented by the general formula (XI) are preferably determined by X-ray crystallography.

The co-catalyst that can be used in the second polymerization catalyst composition may be freely selected from components used as a co-catalyst in in ordinary metallocene complex-containing polymerization catalyst compositions. Preferred examples of the co-catalyst include aluminoxanes, organic aluminum compounds, and the foregoing ionic compounds. These co-catalysts may be contained alone or in combination of two or more thereof.

The aluminoxane is preferably an alkyl aluminoxane, which may be exemplified by methyl aluminoxane (MAO) and modified methyl aluminoxane. Preferred examples of the modified methyl aluminoxane include MMAO-3A (made by Tosoh Finechem Corporation). The aluminoxane may be contained in the second polymerization catalyst composition in an amount of about 10 to 1,000 and preferably about 100, at an element ratio (Al/M) of the aluminum element A1 of the aluminoxane to the central metal element M in the metallocene complex.

A preferred example of the organic aluminum compound is an organic aluminum compound represented by a general formula AlRR'R" (where R and R' are each independently a monovalent hydrocarbon group having a carbon number of 1 to 10, a halogen atom, or a hydrogen atom, and R" is a monovalent hydrocarbon group having a carbon number of 1 to 10). Examples of the halogen atom include a fluorine atom, a chlorine atom, a bromine atom, and an iodine atom, with a chlorine atom being preferred. Examples of the organic aluminum compound include trialkyl aluminum, a dialkyl aluminum chloride, an alkyl aluminum dichloride, and a dialkyl aluminum hydride, with trialkyl aluminum being preferred. Examples of the trialkyl aluminum include triethyl aluminum and triisobutyl aluminum. The organic aluminum compound may be contained in the polymerization catalyst composition in an amount of preferably 1 time to 50 times

mol and more preferably about 10 times mol, with respect to the metallocene complex.

In the polymerization catalyst composition, the metallocene complexes represented by the general formulae (IX) and (X) and the half metallocene complex represented by the general formula (XI) may each be combined with an appropriate co-catalyst, to thereby increase the cis-1,4 bond content and the molecular weight of the polymer obtained.

- Third polymerization catalyst composition -

The third polymerization catalyst composition will be described below.

The third polymerization catalyst composition is, for example, a polymerization catalyst composition containing, as a rare-earth element-containing compound, a metallocene-based composite catalyst represented by the following general formula (XIII):

$R_aMX_bQY_b$ ... (XIII)

(where R are each independently an unsubstituted or substituted indenyl where R is coordinated to M, M is a lanthanoid element, scandium, or yttrium, X are each independently a hydrocarbon group having a carbon number of 1 to 20 where X is μ-coordinated to M and Q, Q is an element of group 13 in the periodic table, Y are each independently a monovalent hydrocarbon group having a carbon number of 1 to 20 or a hydrogen atom where Y is coordinated to Q, and a and b are 2).

A preferred example of the metallocene-based composite catalyst is a metallocene-based composite catalyst represented by the following general formula (XIV):

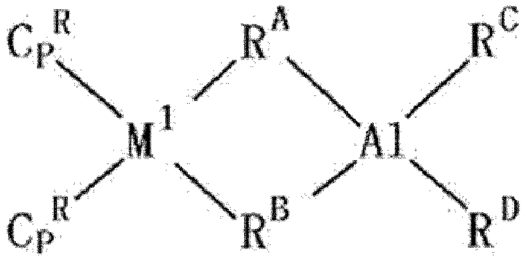

(XIV)

(where $M^1$ is a lanthanoid element, scandium, or yttrium, $Cp^R$ are each independently an unsubstituted or substituted indenyl, $R^A$ and $R^B$ are each independently a univalent hydrocarbon group having a carbon number of 1 to 20 where $R^A$ and $R^B$ are μ-coordinated to $M^1$ and Al, and $R^C$ and $R^D$ are each independently a univalent hydrocarbon group having a carbon number of 1 to 20 or a hydrogen atom).

By using the metallocene-based composite catalyst, a multicomponent copolymer can be produced. By using the metallocene-based composite catalyst, e.g. a catalyst prepared by combining with an aluminum catalyst beforehand, the amount of alkylaluminum used in the synthesis of the multicomponent copolymer can be reduced or the use of alkylaluminum can be omitted. If the conventional catalyst system is used, a large amount of alkylaluminum needs to be used in the synthesis of the multicomponent copolymer. For example, in the case of the conventional catalyst system, alkylaluminum needs to be used in an amount of 10 molar equivalent or more, with respect to the metal catalyst. In the case of the metallocene-based composite catalyst, on the other hand, an excellent catalytic action is exhibited by adding alkylaluminum in an amount of approximately 5 molar equivalent, with respect to the metal catalyst.

In the metallocene-based composite catalyst, the metal M in the general formula (XIII) is a lanthanoid element, scandium, or yttrium. Lanthanoid elements include 15 elements with atomic numbers 57 to 71, any of which may be used. Preferred examples of the metal M include samarium Sm, neodymium Nd, praseodymium Pr, gadolinium Gd, cerium Ce, holmium Ho, scandium Sc, and yttrium Y.

In the general formula (XIII), R are each independently an unsubstituted indenyl or a substituted indenyl where R is coordinated to the metal M. Specific examples of the substituted indenyl include a 1,2,3-trimethylindenyl group, a heptamethylindenyl group, and a 1,2,4,5,6,7-hexamethylindenyl group.

In the general formula (XIII), Q is an element of group 13 in the periodic table. Specific examples of such an element include boron, aluminum, gallium, indium, and thallium.

In the general formula (XIII), X are each independently a monovalent hydrocarbon group having a carbon number of 1 to 20 where X is μ-coordinated to M and Q. Examples of the monovalent hydrocarbon group having a carbon number of 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group. The μ-coordination means a coordination having a crosslinking structure.

In the general formula (XIII), Y are each independently a monovalent hydrocarbon group having a carbon number of 1 to 20 or a hydrogen atom, and Y is coordinated to Q. Examples of the monovalent hydrocarbon group having a carbon number of 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

In the general formula (XIV), the metal $M^1$ is a lanthanoid element, scandium, or yttrium. Lanthanoid elements include 15 elements with atomic numbers 57 to 71, any of which may be used. Preferred examples of the metal $M^1$ include samarium Sm, neodymium Nd, praseodymium Pr, gadolinium Gd, cerium Ce, holmium Ho, scandium Sc, and yttrium Y.

In the general formula (XIV), $Cp^R$ is an unsubstituted indenyl or a substituted indenyl. $Cp^R$ containing the indenyl ring as a basic skeleton may be represented by $C_9H_{7-X}R_X$ or $C_9H_{11-X}R_X$. Herein, X is an integer of 0 to 7, or 0 to 11. R are preferably each independently a hydrocarbyl group or a metalloid group. The carbon number of the hydrocarbyl group is preferably 1 to 20, more preferably 1 to 10, and further preferably 1 to 8. Specific examples of the hydrocarbyl group include a methyl group, an ethyl group, a phenyl group, and a benzyl group. Examples of the metalloid in the metalloid group include germyl Ge, stannyl Sn, and silyl Si. The metalloid group preferably has a hydrocarbyl group which is the same as the hydrocarbyl group described above. A specific example of the metalloid group is a trimethylsilyl group.

Specific examples of the substituted indenyl include 2-phenylindenyl and 2-methylindenyl. The two $Cp^R$ in the general formula (XIV) may be the same or different.

In the general formula (XIV), $R^A$ and $R^B$ are each independently a monovalent hydrocarbon group having a carbon number of 1 to 20, and $R^A$ and $R^B$ are $\mu$-coordinated to $M^1$ and Al. Examples of the monovalent hydrocarbon group having a carbon number of 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group. The $\mu$-coordination means a coordination having a crosslinking structure.

In the general formula (XIV), $R^C$ and $R^D$ are each independently a monovalent hydrocarbon group having a carbon number of 1 to 20 or a hydrogen atom. Examples of the monovalent hydrocarbon group having a carbon number of 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

The metallocene-based composite catalyst can be obtained, for example, by allowing a metallocene complex represented by the following general formula (XV) to react with an organic aluminum compound represented by $AlR^KR^LR^M$ in a solvent:

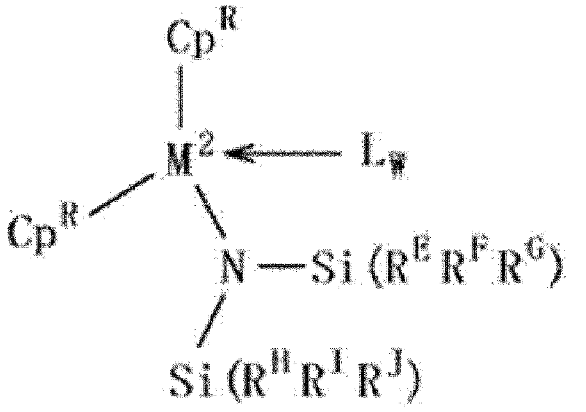

· · · (XV)

(where $M^2$ is a lanthanoid element, scandium, or yttrium, $Cp^R$ are each independently an unsubstituted or substituted indenyl, $R^E$ to $R^J$ are each independently an alkyl group having a carbon number of 1 to 3 or a hydrogen atom, L is a neutral Lewis base, and w is an integer of 0 to 3). Since the reaction temperature may be set to be approximately room temperature, the metallocene-based composite catalyst can be produced under moderate conditions. The reaction time is not limited, but is approximately several hours to several tens of hours. The reaction solvent is not limited, but is preferably a solvent that dissolves a raw material and a product. For example, toluene or hexane may be used. The structure of the metallocene-based composite catalyst is preferably determined by $^1H$-NMR or X-ray structural analysis.

In the metallocene complex represented by the general formula (XV), $Cp^R$ is an unsubstituted indenyl or a substituted indenyl, and has the same definition as $Cp^R$ in the general formula (XIV). In the general formula (XV), the

metal $M^2$ is a lanthanoid element, scandium, or yttrium, and has the same definition as the metal $M^1$ in the general formula (XIV).

The metallocene complex represented by the general formula (XV) contains a silylamide ligand $[-N(SiR_3)_2]$. R groups ($R^E$ to $R^J$ groups) contained in the silylamide ligand are each independently an alkyl group having a carbon number of 1 to 3 or a hydrogen atom. At least one of $R^E$ to $R^J$ is preferably a hydrogen atom. As a result of at least one of $R^E$ to $R^J$ being a hydrogen atom, the synthesis of the catalyst is easier. The alkyl group is preferably a methyl group.

The metallocene complex represented by the general formula (XV) further contains zero to three neutral Lewis bases L, preferably zero or one neutral Lewis base L. Examples of the neutral Lewis base L include tetrahydrofuran, diethyl ether, dimethylaniline, trimethylphosphine, lithium chloride, neutral olefins, and neutral diolefins. In the case where the complex includes a plurality of neutral Lewis bases L, the neutral Lewis bases L may be the same or different.

The metallocene complex represented by the general formula (XV) may be present in the form of a monomer, or in the form of a dimer or a higher multimer.

The organic aluminum compound used in the generation of the metallocene-based composite catalyst is represented by $AlR^KR^LR^M$, where $R^K$ and $R^L$ are each independently a monovalent hydrocarbon group having a carbon number of 1 to 20 or a hydrogen atom, and $R^M$ is a monovalent hydrocarbon group having a carbon number of 1 to 20, where $R^M$ may be the same as or different from $R^K$ or $R^L$. Examples of the monovalent hydrocarbon group having a carbon number of 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

Specific examples of the organic aluminum compound include: trimethyl aluminum, triethyl aluminum, tri-n-propylaluminum, triisopropylaluminum, tri-n-butyl aluminum, triisobutyl aluminum, tri-t-butyl aluminum, tripentylaluminum, trihexylaluminum, tricyclohexylaluminum, and trioctylaluminum; diethyl aluminum hydride, di-n-propylaluminum hydride, di-n-butyl aluminum hydride, diisobutyl aluminum hydride, dihexylaluminum hydride, diisohexylaluminum hydride, dioctylaluminum hydride, and diisooctylaluminum hydride; and ethyl aluminum dihydride, n-propylaluminum dihydride, and isobutyl aluminum dihydride. Of these, triethyl aluminum, triisobutyl aluminum, diethyl aluminum hydride, and diisobutyl aluminum hydride are preferable. These organic aluminum compounds may be used alone or in combinations of two or more thereof. The organic aluminum compound used in the generation of the metallocene-based composite catalyst is in an amount of preferably 1 time to 50 times mol, and more preferably approximately 10 times mol, with respect to the metallocene complex.

The third polymerization catalyst composition may contain the metallocene-based composite catalyst and a boron anion, and preferably further contains one or more other components, such as a co-catalyst, contained in ordinary polymerization catalyst compositions containing metallocene-based catalysts. The metallocene-based composite catalyst and boron anion are also collectively referred to as "two-component catalyst". Since the third polymerization catalyst composition further contains a boron anion, as well as the metallocene-based composite catalyst, the content of each monomeric component in the polymer can be freely regulated.

A specific example of the boron anion constituting the two-component catalyst in the third polymerization catalyst composition is a tetravalent boron anion. Examples of the tetravalent boron anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl,pentafluorophenyl)borate, [tris(pentafluorophenyl),phenyl]borate, and tridecahydride-7,8-dicarbaundecaborate. Of these, tetrakis(pentafluorophenyl)borate is preferable.

The boron anion can be used in the form of an ionic compound in combination with a cation. Examples of the cation include a carbonium cation, an oxonium cation, an amine cation, a phosphonium cation, a cycloheptatrienyl cation, and a ferrocenium cation having a transition metal. Examples of the carbonium cation include trisubstituted carbonium cations such as a triphenylcarbonium cation and a tri(substituted phenyl)carbonium cation. A specific example of the tri(substituted phenyl)carbonyl cation is a tri(methylphenyl)carbonium cation. Examples of the amine cation include: trialkylammonium cations such as a trimethylammonium cation, a triethylammonium cation, a tripropylammonium cation, and a tributylammonium cation; N,N-dialkylanilinium cations such as an N,N-dimethylanilinium cation, an N,N-diethylanilinium cation, and an N,N-2,4,6-pentamethylanilinium cation; and dialkylammonium cations such as a diisopropylammonium cation and a dicyclohexylammonium cation. Examples of the phosphonium cation include triarylphosphonium cations such as a triphenylphosphonium cation, a tri(methylphenyl)phosphonium cation, and a tri(dimethylphenyl)phosphonium cation. Of these cations, an N,N-dialkylanilinium cation and a carbonium cation are preferable, and an N,N-dialkylanilinium cation is more preferable. Accordingly, the ionic compound is preferably N,N-dimethylanilinium tetrakis(pentafluorophenyl)borate, triphenylcarbonium tetrakis(pentafluorophenyl)borate, or the like. The ionic compound consisting of a boron anion and a cation is added in an amount of preferably 0.1 to 10 times mol and more preferably approximately 1 time mol, with respect to the metallocene-based composite catalyst.

If a boron anion is present in a reaction system for reacting the metallocene complex represented by the general formula (XV) with the organic aluminum compound, the metallocene-based composite catalyst represented by the

general formula (XIV) cannot be synthesized. Therefore, in order to prepare the third polymerization catalyst composition, it is necessary to synthesize the metallocene-based composite catalyst beforehand, isolate and purity the metallocene-based composite catalyst, and then combine the metallocene-based composite catalyst with a boron anion.

Preferred examples of the co-catalyst that can be used in the third polymerization catalyst composition include aluminoxane, as well as the organic aluminum compound represented by $AlR^KR^LR^M$. The aluminoxane is preferably alkyl aluminoxane, and examples of the alkyl aluminoxane include methyl aluminoxane (MAO) and modified methyl aluminoxane. The modified methyl aluminoxane is preferably MMAO-3A (made by Tosoh Finechem Corporation), etc. These aluminoxanes may be used alone or in combinations of two or more thereof.

- Fourth polymerization catalyst composition -

The fourth polymerization catalyst composition contains a rare-earth element compound and a compound having a cyclopentadiene skeleton.

The fourth polymerization catalyst composition needs to contain:

- a rare-earth element compound (hereafter also referred to as "component (A2)"); and
- a compound selected from the group consisting of a substituted or unsubstituted cyclopentadiene, a substituted or unsubstituted indene (a compound having an indenyl group), and a substituted or unsubstituted fluorine (hereafter also referred to as "component (B2)").

The fourth polymerization catalyst composition may further contain:

- an organic metal compound (hereafter also referred to as "component (C2)");
- an aluminoxane compound (hereafter also referred to as "component (D2)"); and
- a halogen compound (hereafter also referred to as "component (E2)").

The fourth polymerization catalyst composition preferably has high solubility in an aliphatic hydrocarbon, and preferably forms a homogeneous solution in the aliphatic hydrocarbon. Examples of the aliphatic hydrocarbon include hexane, cyclohexane, and pentane.

The fourth polymerization catalyst composition preferably does not contain an aromatic hydrocarbon. Examples of the aromatic hydrocarbon include benzene, toluene, and xylene.

Herein, "not containing an aromatic hydrocarbon" means that the proportion of the aromatic hydrocarbon in the polymerization catalyst composition is less than 0.1 mass%.

The component (A2) is, for example, a rare-earth element-containing compound or a reaction product of the rare-earth element-containing compound and a Lewis base, the rare-earth element-containing compound or the reaction product having a metal-nitrogen bond (M-N bond).

The rare-earth element-containing compound is, for example, a compound containing scandium, yttrium, or a lanthanoid element composed of any of the elements with atomic numbers 57 to 71. Specific examples of the lanthanoid element include lanthanum, cerium, praseodymium, neodymium, promethium, samarium, europium, gadolinium, terbium, dysprosium, holmium, erbium, thulium, ytterbium, and lutetium.

Examples of the Lewis base include tetrahydrofuran, diethyl ether, dimethylaniline, trimethylphosphine, lithium chloride, neutral olefins, and neutral diolefins.

The rare-earth element-containing compound or the reaction product of the rare-earth element-containing compound and the Lewis base preferably does not have a bond of the rare-earth element and carbon. In the case where the reaction product of the rare-earth element-containing compound and the Lewis base does not have a rare-earth element-carbon bond, the reaction product is stable and easy to handle.

These components (A2) may be used alone or in combination of two or more thereof.

The component (A2) is preferably a compound represented by the following general formula (XVI):

$$M\text{-}(AQ^1)(AQ^2)(AQ^3) \ldots \qquad (XVI)$$

(where M is at least one element selected from the group consisting of scandium, yttrium, and a lanthanoid element, $AQ^1$, $AQ^2$, and $AQ^3$ are functional groups which may be the same or different, A is at least one selected from the group consisting of nitrogen, oxygen, and sulfur, and the component (A2) has at least one M-A bond).

Specific examples of the lanthanoid element include lanthanum, cerium, praseodymium, neodymium, promethium, samarium, europium, gadolinium, terbium, dysprosium, holmium, erbium, thulium, ytterbium, and lutetium.

The compound is a component capable of improving the catalytic activity in the reaction system, shortening the reaction time, and increasing the reaction temperature.

In particular, M in the general formula (XVI) is preferably gadolinium, from the viewpoint of improving the catalytic activity and the reaction controllability.

In the case where A in the general formula (XVI) is nitrogen, the functional groups represented by $AQ^1$, $AQ^2$, and $AQ^3$ (i.e. $NQ^1$, $NQ^2$, and $NQ^3$) may be, for example, an amino group. In this case, the component (A2) has three M-N bonds.

Examples of the amino group include: aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tri-tert-butylphenylamino group; and bistrialkylsilylamino groups such as a bistrimethylsilylamino group. In particular, a bistrimethyllsilylamino group is preferable from the viewpoint of the solubility in an aliphatic hydrocarbon and an aromatic hydrocarbon. These amino groups may be used alone or in combination of two or more thereof.

With this structure, the component (A2) is a compound having three M-N bonds, so that the bonds are chemically equivalent to one another. Such a compound has a stable structure and is easy to handle.

Moreover, with this structure, the catalytic activity in the reaction system can be further improved. Consequently, the reaction time can be further shortened, and the reaction temperature can be further increased.

In the case where A in the general formula (XVI) is oxygen, the component (A2) represented by the general formula (XVI) is not limited, but is, for example, a rare earth alcoholate represented by the following general formula (XVII):

$(RO)_3M$ ... (XVII)

or a rare earth carboxylate represented by the following general formula (XVIII):

$(R\text{-}CO_2)_3M$ ... (XVIII).

In the general formulae (XVII) and (XVIII), R may be the same or different, and are an alkyl group having a carbon number of 1 to 10.

Since the component (A2) preferably does not have the bond between the rare-earth element and carbon, the compound represented by the general formula (XVII) or the compound represented by the general formula (XVIII) is preferably used.

In the case where A in the general formula (XVI) is sulfur, the component (A2) represented by the general formula (XVI) is not limited, but is, for example, a rare earth alkylthiolate represented by the following general formula (XIX):

$(RS)_3M$ ... (XIX)

or a compound represented by the following general formula (XX):

$(R\text{-}CS_2)_3M$ ... (XX).

In the general formulae (XIX) and (XX), R may be the same or different, and are an alkyl group having a carbon number of 1 to 10.

Since the component (A2) preferably does not have the bond between the rare-earth element and carbon, the compound (XIX) or (XX) is preferably used.

The component (B2) is a compound selected from the group consisting of a substituted or unsubstituted cyclopentadiene, a substituted or unsubstituted indene (a compound having an indenyl group), and a substituted or unsubstituted fluorene.

These compounds as the components (B2) may be used alone or in combination of two or more thereof.

Examples of the substituted cyclopentadiene include pentamethylcyclopentadiene, tetramethylcyclopentadiene, isopropylcyclopentadiene, and trimethyllsilyltetramethylcyclopentadiene.

Examples of the substituted or unsubstituted indene include indene, 2-phenyl-1H-indene, 3-benzyl-1H-indene, 3-methyl-2-phenyl-1H-indene, 3-benzyl-2-phenyl-1H-indene, and 1-benzyl-1H-indene. In particular, 3-benzyl-1H-indene and 1-benzyl-1H-indene are preferable from the viewpoint of reducing the molecular weight distribution.

Examples of the substituted fluorine include trimethyllsilylfluorene and isopropylfluorene.

With this structure, conjugated electrons contained in the compound having a cyclopentadiene skeleton can be increased, so that the catalytic activity in the reaction system can be further improved. Consequently, the reaction time can be further shortened, and the reaction temperature can be further increased.

The organic metal compound (component (C2)) is a compound represented by the following general formula (XXI):

$YR^4_aR^5_bR^6_c$ ... (XXI)

(where Y is a metal element selected from the group consisting of elements of groups 1, 2, 12, and 13 in the periodic table, $R^4$ and $R^5$ are each a monovalent hydrocarbon group having a carbon number of 1 to 10 or a hydrogen atom, $R^6$ is a monovalent hydrocarbon group having a carbon number of 1 to 10, $R^4$, $R^5$, and $R^6$ may be the same or different, a is 1 and b and c are 0 in the case where Y is a metal element of group 1, a and b are 1 and c is 0 in the case where Y is a metal element of group 2 or 12 and a, b, and c are 1 in the case where Y is a metal element of group 13).

At least one of $R^1$, $R^2$, and $R^3$ is preferably different in the general formula (XXI), from the viewpoint of improving the catalytic activity.

In detail, the component (C2) is preferably an organic aluminum compound represented by the following general formula (XXII):

$AlR^7R^8R^9$ ... (XXII)

(where $R^7$and $R^8$ are each a monovalent hydrocarbon group having a carbon number of 1 to 10 or a hydrogen atom, $R^9$ is a monovalent hydrocarbon group having a carbon number of 1 to 10, and $R^7$, $R^8$, and $R^9$ may be the same or different).

Examples of the organic aluminum compound include: trimethyl aluminum, triethyl aluminum, tri-n-propylaluminum, triisopropylaluminum, tri-n-butyl aluminum, triisobutyl aluminum, tri-t-butyl aluminum, tripentylaluminum, trihexylaluminum, tricyclohexylaluminum, and trioctylaluminum; diethyl aluminum hydride, di-n-propylaluminum hydride, di-n-butyl aluminum hydride, diisobutyl aluminum hydride, dihexylaluminum hydride, diisohexylaluminum hydride, dioctylaluminum hydride, and diisooctylaluminum hydride; and ethyl aluminum dihydride, n-propylaluminum dihydride, and isobutyl aluminum dihydride. Triethyl aluminum, triisobutyl aluminum, diethyl aluminum hydride, and diisobutyl aluminum hydride are preferable, and diisobutyl aluminum hydride is more preferable.

These organic aluminum compounds may be used alone or in combination of two or more thereof.

The aluminoxane compound (component (D2)) is a compound obtained by causing an organic aluminum compound to come into contact with a condensation agent.

As a result of using the component (D2), the catalytic activity in the polymerization reaction system can be further improved. Consequently, the reaction time can be further shortened, and the reaction temperature can be further increased.

Examples of the organic aluminum compound include trialkylaluminum such as trimethyl aluminum, triethyl aluminum, and triisobutyl aluminum, and mixtures thereof. In particular, trimethyllaluminum and a mixture of trimethyllaluminum and tributyl aluminum are preferable.

The condensation agent is, for example, water.

The component (D2) is, for example, an aluminoxane represented by the following general formula (XXIII):

$-(Al(R^{10})O)_n-$ ... (XXIII)

(where $R^{10}$ is a univalent hydrocarbon group having a carbon number of 1 to 10, part of the hydrocarbon group may be substituted by a halogen and/or an alkoxy group, $R^{10}$ may be the same or different among repeating units, and n is 5 or more).

The molecular structure of the aluminoxane may be linear or cyclic.

n in the general formula (XXIII) is preferably 10 or more.

Examples of the hydrocarbon group of $R^{10}$ in the general formula (XXIII) include a methyl group, an ethyl group, a propyl group, and an isobutyl group. In particular, a methyl group is preferable. These hydrocarbon groups may be used alone or in combination of two or more thereof. The hydrocarbon group of $R^{10}$ is preferably a combination of a methyl group and an isobutyl group.

The aluminoxane preferably has high solubility in an aliphatic hydrocarbon, and preferably has low solubility in an aromatic hydrocarbon. For example, an aluminoxane commercially available as a hexane solution is preferable.

Examples of the aliphatic hydrocarbon include hexane and cyclohexane.

The component (D2) may be a modified aluminoxane (hereafter also referred to as "TMAO") represented by the following general formula (XXIV):

$-(Al(CH_3)_x(i\text{-}C_4H_9)_yO)_m-$ ... (XXIV)

(where x + y is 1, and m is 5 or more). An example of TMAO is product name "TMAO341" made by Tosoh Finechem Corporation.

The component (D2) may be a modified aluminoxane (hereafter also referred to as "MMAO") represented by

the following general formula (XXV):

$$-(Al(CH_3)_{0.7}(i\text{-}C_4H_9)_{0.3}O)_k- \ldots \quad (XXV)$$

(where k is 5 or more). An example of MMAO is product name "MMAO-3A" made by Tosoh Finechem Corporation.

The component (D2) may be a modified aluminoxane (hereafter also referred to as "PMAO") represented by the following general formula (XXVI):

$$-[(CH_3)AlO]_i- \ldots \quad (XXVI)$$

(where i is 5 or more). An example of PMAO is product name "TMAO-211" made by Tosoh Finechem Corporation.

From the viewpoint of improving the catalytic activity improving effect, the component (D2) is preferably MMAO or TMAO from among MMAO, TMAO, and PMAO. From the viewpoint of further improving the catalytic activity improving effect, the component (D2) is more preferably TMAO.

The halogen compound (component (E2)) is a at least one compound selected from the group consisting of a halogen-containing compound (hereafter also referred to as "component (E2-1)") which is a Lewis acid, a complex compound of a metal halide and a Lewis base (hereafter also referred to as "component (E2-2)"), and an organic compound containing an active halogen (hereafter also referred to as "component (E2-3)").

Such a compound reacts with the component (A2), i.e. the rare-earth element-containing compound or the reaction product of the rare-earth element-containing compound and the Lewis base where the rare-earth element-containing compound or the reaction product has an M-N bond, thereby generating a cationic transition metal compound, a halogenated transition metal compound, and/or a transition metal compound in a state in which electrons are insufficient at the transition metal center.

By using the component (E2), the cis-1,4 bond content of the conjugated diene polymer can be further increased.

The component (E2-1) is, for example, a halogen-containing compound containing an element of group 3, group 4, group 5, group 6, group 8, group 13, group 14, or group 15 in the periodic table. In particular, an aluminum halide or an organometallic halide is preferable.

Examples of the halogen-containing compound which is a Lewis acid include titanium tetrachloride, tungsten hexachloride, tri(pentafluorophenyl)borate, methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, aluminum tribromide, tri(pentafluorophenyl) aluminum, dibutyltin dichloride, tin tetrachloride, phosphorus trichloride, phosphorus pentachloride, antimony trichloride, and antimony pentachloride. In particular, ethyl aluminum dichloride, ethyl aluminum dibromide, diethyl aluminum chloride, diethyl aluminum bromide, ethyl aluminum sesquichloride, and ethyl aluminum sesquibromide are preferable.

As the halogen, chlorine or bromine is preferable.

These halogen-containing compounds which are Lewis acids may be used alone or in combination of two or more thereof.

Examples of the metal halide used in the component (E2-2) include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper bromide, copper iodide, silver chloride, silver bromide, silver iodide, gold chloride, gold iodide, and gold bromide. Magnesium chloride, calcium chloride, barium chloride, zinc chloride, manganese chloride, and copper chloride are preferable, and magnesium chloride, zinc chloride, manganese chloride, and copper chloride are more preferable.

The Lewis base used in the component (E2-2) is preferably a phosphorus compound, a carbonyl compound, a nitrogen compound, an ether compound, or an alcohol.

Examples include tributyl phosphate, tri-2-ethylhexyl phosphate, triphenyl phosphate, tricresyl phosphate, triethylphosphine, tributylphosphine, triphenylphosphine, diethylphosphino ethane, diphenylphosphino ethane, acetylacetone, benzoylacetone, propionitrileacetone, valerylacetone, ethyl acetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, and lauryl alcohol. In particular, tri-2-ethylhexyl phosphate, tricresyl phosphate, acetylacetone, 2-ethylhexane acid, versatic acid, 2-ethylhexyl alcohol, 1-decanol, and lauryl alcohol are preferable.

The Lewis base is brought to reaction preferably at a ratio of 0.01 mol to 30 mol and more preferably at a ratio

of 0.5 mol to 10 mol, per 1 mol of the metal halide . By using a reaction product with the Lewis base, metal remaining in the polymer can be reduced.

These complex compounds of a metal halide and a Lewis base (component (E2-2)) may be used alone or in combination of two or more thereof.

The component (E2-3) is, for example, benzyl chloride.

The mass proportion of each component of the fourth polymerization catalyst composition will be described below.

From the viewpoint of obtaining the catalytic activity sufficiently, the molar ratio of the component (B2) (compound selected from the group consisting of a substituted or unsubstituted cyclopentadiene, a substituted or unsubstituted indene, and a substituted or unsubstituted fluorene) to the component (A2) (rare-earth element compound) is preferably more than 0, more preferably 0.5 or more, and particularly preferably 1 or more. From the viewpoint of suppressing a decrease of the catalytic activity, the molar ratio is preferably 3 or less, more preferably 2.5 or less, and further preferably 2.2 or less.

From the viewpoint of improving the catalytic activity in the reaction system, the molar ratio of the component (C2) (organic metal compound) to the component (A2) is preferably 1 or more, and more preferably 5 or more. From the viewpoint of suppressing a decrease of the catalytic activity, the molar ratio is preferably 50 or less, and more preferably 30 or less. Specifically, the molar ratio is further preferably approximately 10.

From the viewpoint of improving the catalytic activity in the reaction system, the molar ratio of aluminum in the component (D2) (aluminoxane) to the rare-earth element in the component (A2) is preferably 10 or more, and more preferably 100 or more. From the viewpoint of suppressing a decrease of the catalytic activity, the molar ratio is preferably 1,000 or less, and more preferably 800 or less.

From the viewpoint of improving the catalytic activity, the molar ratio of the component (E2) (halogen compound) to the component (A2) is preferably 0 or more, more preferably 0.5 or more, and further preferably 1.0 or more. From the viewpoint of maintaining the solubility of the component (E2) and suppressing a decrease of the catalytic activity, the molar ratio is preferably 20 or less, and more preferably 10 or less.

With such a range, the effect of improving the cis-1,4 bond content of the conjugated diene polymer can be enhanced.

The fourth polymerization catalyst composition preferably does not contain an ionic compound consisting of a non-coordinating anion (for example, tetravalent boron anion) and a cation (for example, carbonium cation, oxonium cation, ammonium cation, phosphonium cation, cycloheptatrienyl cation, or ferrocenium cation having transition metal). The ionic compound has high solubility in an aromatic hydrocarbon, and has low solubility in a hydrocarbon. Therefore, if the polymerization catalyst composition does not contain the ionic compound, the conjugated dienepolymer can be produced with lower environmental load and lower production cost.

Herein, "not containing an ionic compound" means that the proportion of the ionic compound in the polymerization catalyst composition is less than 0.01 mass%.

In the rubber composition according to this embodiment, the proportion of the multicomponent copolymer (a2) in the rubber component (a) is preferably 5 mass% to 40 mass%. As a result of the proportion being 5 mass% or more, the crack growth resistance can be sufficiently improved. As a result of the proportion being 40 mass% or less, degradation in the dispersibility of the filler (b) and thus degradation in low heat generating property can be suppressed, while effectively improving the crack growth resistance. As a result of the proportion being 40 mass% or less, the phase of the relatively hard multicomponent copolymer (a2) and the phase in which relatively a large amount of the filler (b) disperses in the relatively soft modified conjugated diene-based polymer (a1) approximate in hardness, thus achieving well-balanced rigidity as a whole. From the same viewpoint, the proportion of the multicomponent copolymer (a2) in the rubber component (a) is more preferably 10 mass% or more, and is more preferably 30 mass% or less.

<Other rubber components>

Other rubber components are not limited, and examples include natural rubber, isoprene rubber, butadiene rubber (BR), styrene-butadiene rubber (SBR), acrylonitrile-butadiene rubber (NBR), chloroprene rubber, ethylene-propylene rubber (EPM), ethylene-propylene-diene rubber (EPDM), polysulfide rubber, silicone rubber, fluororubber, and urethane rubber. These other rubber components may be used alone or in combination of two or more thereof.

(Filler (b))

The rubber composition according to this embodiment contains the filler (b). Examples of the filler (b) include silica, carbon black, aluminum oxide, clay, alumina, talc, mica, kaolin, glass balloon, glass beads, calcium carbonate, magnesium carbonate, magnesium hydroxide, calcium carbonate, magnesium oxide, titanium oxide, potassium titanate, and barium sulfate. These fillers may be used alone or in combination of two or more thereof. In particular, the filler (b)

preferably contains one or more selected from silica and carbon black, from the viewpoint of improving the dispersibility in the modified conjugated diene-based polymer (a1) and the low heat generating property.

The carbon black is not limited, and examples include SAF, ISAF, HAF, FF, FEF, GPF, SRF, CF, FT, and MT-grade carbon blacks. These carbon blacks may be used alone or in combination of two or more thereof. Of these, SAF, ISAF, and HAF-grade carbon blacks are preferable as the carbon black.

The silica is not limited, and examples include wet silica, dry silica, and colloidal silica. These silicas may be used alone or in combination of two or more thereof. Of these, wet silica is preferable as the silica.

Typically, particles of silica each have a number of micropores as recessed portions with openings at the outer surface of the particle. FIG. 1 is a schematic view illustrating the shapes of such micropores in a cross-section in the inner core direction of a particle of silica. Micropores seen as recessed portions in a cross-section in the inner core direction of a silica particle have various shapes. In detail, a micropore A has a shape in which the diameter $M_a$ of the opening on the outer surface of the particle is approximately equal to the micropore dimeter (inner diameter) $R_a$ inside the particle, i.e. an approximately cylindrical shape in a cross-section in the inner core direction of the particle. A micropore B has a shape in which the diameter $M_b$ of the opening on the outer surface of the particle is smaller than the micropore diameter (inner diameter) $R_b$ inside the particle, i.e. an ink bottle shape in a cross-section in the inner core direction of the particle. Silica preferably has a smaller number of ink bottle-shaped micropores B and a larger number of micropores A approximately cylindrical in a cross-section in the inner core direction of the particle. Thus, the entry of rubber molecular chains can be facilitated efficiently, and sufficient reinforcing property can be exhibited without degradation in low heat generating property.

In view of this, an ink bottle-shaped micropore index (IB) is specified for silica (silica having micropores with openings in a range of $1.2 \times 10^5$ nm to 6 nm in diameter on the outer surface). When pressure is increased in measurement using a mercury porosimeter based on a mercury press-in method, mercury is easily charged into the approximately cylindrical micropore A because its opening on the outer surface is wide, whereas mercury is not easily charged into the ink bottle-shaped micropore B because its opening on the outer surface is narrow. When pressure is deceased, mercury is easily discharged from the approximately cylindrical micropore A to the outside, whereas mercury is hardly discharged from the ink bottle-shaped micropore B to the outside, for the same reasons as above.

FIG. 2 is a mercury charge and discharge curves (schematic diagram) of the silica as an example by measurement using a mercury porosimeter based on a mercury press-in method. The vertical axis indicates the differential mercury charge rate (-dV/d (log d)) in the mercury charge curve C, and the differential mercury discharge rate (-dV/d (log d)) in the mercury discharge curve D. V denotes the mercury charge rate (cc) in the mercury charge curve C and the mercury discharge rate (cc) in the mercury discharge curve D, and d denotes the diameter (nm) of an opening in a micropore of silica. The horizontal axis indicates d (nm). As illustrated in FIG. 2, in the measurement using the mercury porosimeter based on the mercury press-in method, there is hysteresis in the mercury charge curve C and the mercury discharge curve D. In detail, at relatively low pressure, mercury is gradually charged into the approximately cylindrical micropore A. When a certain pressure is reached, however, suddenly mercury is also charged into micropores other than the approximately cylindrical micropore, such as the ink bottle-shaped micropore B into which mercury has hardly been charged before. Hence, the charge rate increases sharply, forming the charge curve C where the vertical axis indicates the differential mercury charge rate (-dV/d (log d)) and the horizontal axis indicates the diameter M (nm) of the opening of the micropore of silica. On the other hand, suppose the pressure is sufficiently increased and then decreased. At relatively high pressure, the state in which mercury is hardly discharged continues. When a certain pressure is reached, however, mercury charged into the micropores is suddenly discharged. Hence, the discharge rate increases sharply, forming the discharge curve D where the vertical axis indicates the differential mercury discharge rate (-dV/d (log d)) and the horizontal axis indicates the diameter M (nm) of the opening of the micropore of silica. Since mercury which has once been charged into micropores tends not to be easily discharged from the micropores when the pressure decreases, an increase in the discharge rate at a position of a diameter (M2) indicating a larger value than a position of a diameter (M1) indicating an increase in the charge rate is seen when the pressure decreases. The difference between these diameters (M2 - M1) corresponds to IB in FIG. 2. The tendency that charged mercury is hardly discharged is particularly noticeable in the ink bottle-shaped micropore B. While mercury is charged into the micropore B upon a pressure increase, mercury is hardly discharged from the micropore B upon a pressure decrease.

When, using the mercury charge curve C and the mercury discharge curve D plotted on the basis of the characteristics of micropores measured with the above-described measurement method, the difference IB between the diameter M1 (nm) of an opening indicating the maximum mercury charge rate when pressure is increased from 1 PSI to 32000 PSI and the diameter M2 (nm) of an opening indicating the maximum mercury discharge rate when pressure is decreased from 32000 PSI to 1 PSI in measurement using the mercury porosimeter based on the mercury press-in method is calculated, the calculated value appears to represent the difference (length: nm) between these diameters, but substantially represents a micropore index indicating the presence ratio of ink bottle-shaped micropores B in silica. Specifically, a smaller presence ratio of ink bottle-shaped micropores B with sufficiently narrow openings results in the mercury charge rate and the mercury discharge rate becoming nearly equal, which yields a smaller IB value due to a

reduction in the difference between the diameter (M1) of the opening indicating the maximum mercury charge rate and the diameter (M2) of the opening indicating the maximum mercury discharge rate. Conversely, a larger presence ratio of ink bottle-shaped micropores B results in the mercury discharge rate decreasing more than the mercury charge rate, which yields a larger IB value due to an increase in the difference between the diameter (M1) of the opening indicating the maximum mercury charge rate and the diameter (M2) of the opening indicating the maximum mercury discharge rate.

The above-described IB can also characteristically vary depending on the specific surface area by cetyltrimethylammonium bromide adsorption (hereafter simply referred to as "CTAB") of silica. The value of IB tends to decrease as CTAB ($m^2/g$) increases. Accordingly, the silica preferably satisfies the following expression (1):

$$IB \leq -0.36 \times CTAB + 86.8 \qquad \ldots (1).$$

In the case where the silica has IB and CTAB satisfying the expression (1), the number of ink bottle-shaped micropores B with narrow openings is effectively reduced and the presence ratio of approximately cylindrical micropores A increases, thus enabling sufficient entry and adsorption of rubber molecular chains. Hence, sufficient reinforcing property can be exhibited, and wear resistance, crack growth resistance, and the like can be improved without a decrease in low heat generating property.

The silica preferably satisfies the following expressions (1') and (2) depending on whether or not the CTAB exceeds 140 ($m^2/g$):

$$IB \leq -0.56 \times CTAB + 110.4 \qquad (\text{where } CTAB \leq 140) \quad \ldots (1')$$

$$IB \leq -0.20 \times CTAB + 60.0 \qquad (\text{where } 140 < CTAB) \quad \ldots (2),$$

and more preferably satisfies the following expressions (1'-1) and (2-1) depending on whether or not the CTAB exceeds 140 (m2/g):

$$IB \leq -0.48 \times CTAB + 97.2 \qquad (\text{where } CTAB \leq 140) \quad \ldots (1'\text{-}1)$$

$$IB \leq -0.20 \times CTAB + 58.0 \qquad (\text{where } 140 < CTAB) \quad \ldots (2\text{-}1).$$

In the case where the silica has IB and CTAB satisfying the expressions (1') and (2) and preferably the expressions (1'-1) and (2-1), the number of ink bottle-shaped micropores B with narrow openings is effectively reduced and the presence ratio of approximately cylindrical micropores A increases, thus enabling sufficient entry and adsorption of rubber molecular chains. Hence, sufficient reinforcing property can be exhibited, and wear resistance, crack growth resistance, and the like can be improved without a decrease in low heat generating property.

The specific surface area by cetyltrimethylammonium bromide adsorption (CTAB) ($m^2/g$) denotes a value measured in accordance with ASTM D3765-92. ASTM D3765-92 is a method for measuring CTAB of carbon black. Therefore, in the present specification, CTAB is calculated by preparing a separate cetyltrimethylammonium bromide standard solution in place of IRB#3 (83.0 $m^2/g$) as the standard, carrying out standardization of silica OT (sodium di-2-ethylhexyl sulfosuccinate) solution using the standard solution, and, on the assumption that the cross-sectional area per one cetyltrimethylammonium bromide molecule adsorbed on the silica surface is 0.35 $nm^2$, taking the specific surface area ($m^2/g$) calculated from the amount of cetyltrimethylammonium bromide adsorption to be the CTAB value. This approach is used because the amount of cetyltrimethylammonium bromide adsorption in the same surface area is thought to differ between carbon black and silica, as carbon black and silica have different surface characteristics.

The specific surface area by cetyltrimethylammonium bromide adsorption (CTAB) of the silica is preferably 50 $m^2/g$ to 300 $m^2/g$, and more preferably 90 $m^2/g$ to 220 $m^2/g$. As a result of the CTAB being 50 $m^2/g$ or more, a considerable decrease in wear resistance, crack growth resistance, and the like can be suppressed. As a result of the CTAB being 300 $m^2/g$ or less, the silica favorably disperses in the rubber component to maintain the processability of the rubber, with it being possible to favorably suppress a decrease in physical properties such as wear resistance and crack growth resistance.

Further, the weight loss on ignition (i.e. mass decrease when heated at 750 °C for 3 hr) (mass%) and the weight loss on heating (mass decrease when heated at 105 °C for 2 hr) (mass%) of the silica preferably satisfy the following

expression (3):

$$\text{weight loss on ignition - weight loss on heating} \geq 2.5\ (\text{mass\%}) \quad \ldots (3),$$

and more preferably satisfy the following expression (3-1):

$$\text{weight loss on ignition - weight loss on heating} \geq 3.0\ (\text{mass\%}) \quad \ldots (3\text{-}1).$$

The "weight loss on ignition - weight loss on heating" is a density index of silanol group on the silica surface. From the viewpoint of interaction between silica and rubber molecular chains, silica satisfying the expression (3) greatly contributes to favorable balance between low heat generating property and wear resistance, crack growth resistance, etc.

The content of the filler (b) in the rubber composition according to this embodiment is preferably 10 parts to 80 parts by mass with respect to 100 parts by mass of the rubber component (a). As a result of the content being 10 parts by mass or more, the low heat generating property can be improved more effectively. As a result of the content being 80 parts by mass or less, the flexibility of the rubber composition can be maintained.

(Silane coupling agent)

In the case where the rubber composition according to the present disclosure contains silica as the filler (b), the rubber composition according to the present disclosure preferably contains a silane coupling agent in order to improve the effect of adding the silica. Examples of the silane coupling agent include bis(3-triethoxysilylpropyl) tetrasulfide (e.g. product name "Si69" made by Evonik Industries AG), bis(3-triethoxysilylpropyl) trisulfide, bis(3-triethoxysilylpropyl) disulfide (e.g. product name "Si75" made by Evonik Industries AG), bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethylN,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, 3-octanoylthiopropyltriethoxysilane, 3-octanoylthiopropyltriethoxysilane (e.g. product name "NXT" made by Momentive Performance Materials Inc.), and 3-[ethoxybis(3,6,9,12,15-pentaoxaoctacosane-1-yloxy)silyl]-1-propanethiol (e.g. product name "Si363" made by Evonic Degussa Corporation). Of these, one or more selected from bis(3-triethoxysilylpropyl) tetrasulfide (e.g. "Si69"), bis(3-triethoxysilylpropyl) disulfide (e.g. "Si75"), 3-octanoylthiopropyltriethoxysilane (e.g. "NXT"), and 3-[ethoxybis(3,6,9,12,15-pentaoxaoctacosane-1-yloxy)silyl]-1-propanethiol (e.g. "Si363") is more preferably contained as the silane coupling agent.

The content of the silane coupling agent in the rubber composition according to this embodiment is preferably 1 part by mass or more and more preferably 4 parts by mass or more and is preferably 20 parts by mass or less and more preferably 15 parts by mass or less with respect to 100 parts by mass of the silica, from the viewpoint of improving the dispersibility of the silica.

(Other components)

The rubber composition according to this embodiment may optionally contain components such as crosslinking agents (including vulcanizing agents such as sulfur), crosslinking accelerators (vulcanization accelerators), crosslinking acceleration aids (vulcanization acceleration aids), age resistors, zinc oxide (ZnO), softeners, waxes, antioxidants, foaming agents, plasticizers, lubricants, tackifiers, petroleum resins, ultraviolet absorbing agents, dispersants, compatibilizing agents, and homogenizing agents as appropriate, within the range that does not impede the effects according to the present disclosure.

(Production of rubber composition)

The production method for the rubber composition according to this embodiment is not limited. For example, the rubber composition according to this embodiment can be obtained by blending and kneading the foregoing components according to a conventional method. In the blending and kneading, all of the components may be blended and kneaded at once, or the components may be blended and kneaded in multiple stages, e.g. in two or three stages. In the kneading, a kneader such as a roll, an internal mixer, or a Banbury rotor may be used. When forming the rubber composition in sheet shape, band shape, or the like, a well-known forming machine such as an extruder or a press may be used.

The rubber composition according to this embodiment may be produced by crosslinking. The crosslinking conditions are not limited, and typical conditions are a temperature of 140 °C to 180 °C and a time of 5 min to 120 min.

The rubber composition according to this embodiment is usable in various rubber articles such as the below-described tire, conveyor belt, rubber crawler, anti-vibration device, seismic isolation device, and hose.

(2) Tire

A tire according to the present disclosure is produced using the foregoing rubber composition. Since the tire according to the present disclosure is produced using the foregoing rubber composition, the tire has excellent balance between crack growth resistance and low heat generating property.

In an embodiment, the tire includes parts such as a tread, a base tread, a sidewall, a side reinforcing rubber, and a bead filler. In an embodiment, the foregoing rubber composition can be used in at least one of these parts. The foregoing rubber composition is particularly suitable for use in the tread.

The tire may be produced by a conventional method. The method may include, for example, sequentially applying and stacking, onto a tire molding drum, members generally used in tire production, such as a carcass layer, a belt layer, and a tread layer formed of an unvulcanized rubber composition and/or cords, removing the drum therefrom to provide a green tire, and then vulcanizing the green tire by heating using a conventional method, to thereby manufacture a desired tire (for example, a pneumatic tire).

(3) Conveyor belt

A conveyor belt according to the present disclosure is produced using the foregoing rubber composition. Since the conveyor belt according to the present disclosure is produced using the foregoing rubber composition, the conveyor belt has excellent balance between crack growth resistance and low heat generating property.

In an embodiment, the conveyor belt includes an inner-circumferential surface layer rubber (lower cover rubber) which is below a reinforcing member made of steel cords or the like and comes into contact with a driving pulley, a driven pulley, a shape retaining rotor, etc., and an outer-circumferential surface layer rubber (upper cover rubber) which is above the reinforcing member and comes into contact with an item being transported. In an embodiment, the foregoing rubber composition can be used in at least one of these parts.

For example, the conveyor belt according to the present disclosure can be produced by sandwiching the reinforcing member between sheets made of the rubber composition and then heating the rubber composition for pressure-bonding and vulcanization so that the rubber composition will adhere to and coat the reinforcing member.

(4) Rubber crawler

A rubber crawler according to the present disclosure is produced using the foregoing rubber composition. Since the rubber crawler according to the present disclosure is produced using the foregoing rubber composition, the rubber crawler has excellent balance between crack growth resistance and low heat generating property.

In an embodiment, the rubber crawler includes steel cords, an intermediate rubber layer covering the steel cords, a core located on the intermediate rubber layer, and a body rubber layer surrounding the intermediate rubber layer and the core, and further includes a plurality of lugs on the footprint side of the body rubber layer. In an embodiment, the foregoing rubber composition can be used in at least one of these parts. The rubber composition is especially suitable for use in the body rubber layer, in particular the lugs, as it has excellent crack growth resistance and low heat generating property.

(5) Anti-vibration device

An anti-vibration device according to the present disclosure is produced using the foregoing rubber composition. Since the anti-vibration device according to the present disclosure is produced using the foregoing rubber composition, the anti-vibration device has excellent balance between crack growth resistance and low heat generating property.

The type of the anti-vibration device is not limited, and examples include an engine mount, a torsional damper, a rubber bush, a strut mount, a bound bumper, a helper rubber, a member mount, a stabilizer bush, an air spring, a center support, a rubber-containing propeller shaft, a vibration-insulating lever, a companion damper, a dumping rubber,

an idler arm bush, a steering column bush, a coupling rubber, a body mount, a muffler support, a dynamic damper, and a piping rubber.

(6) Seismic isolation device

The seismic isolation device according to the present disclosure is produced using the foregoing rubber composition. Since the seismic isolation device according to the present disclosure is produced using the foregoing rubber composition, the seismic isolation device has excellent balance between crack growth resistance and low heat generating property.
In an embodiment, the seismic isolation device includes a laminated body in which a soft layer and a hard layer are alternately laminated, and a plug pressed into a hollow portion formed at the center of the laminated body. In an embodiment, the foregoing rubber composition may be used in at least one of the soft layer and the plug.

(7) Hose

A hose according to the present disclosure is produced using the foregoing rubber composition. Since the hose according to the present disclosure is produced using the foregoing rubber composition, the hose has excellent balance between crack growth resistance and low heat generating property.
In an embodiment, the hose includes an inner surface rubber layer (inner tube rubber) located on the radially inner side and an outer surface rubber layer located on the radially outer side, and optionally includes a reinforcement layer located between the inner surface rubber layer and the outer surface rubber layer. In an embodiment, the foregoing rubber composition may be used in at least one of the inner surface rubber layer and the outer surface rubber layer. The foregoing rubber composition may also be used in a hose composed of a single rubber layer.

## EXAMPLES

The presently disclosed techniques will be described in more detail below by way of examples, although these examples are intended for illustrative purposes only, and are not intended to limit the scope of the present disclosure in any way.

<Production of copolymer A (multicomponent copolymer)>

160 g of styrene as an aromatic vinyl compound and 600 mL of toluene were added into a sufficiently dried 1,000 mL pressure-resistant stainless steel reactor.
Meanwhile, in a glove box in a nitrogen atmosphere, 0.25 mmol of mono(bis(1,3-tert-butyldimethylsilyl)indenyl)bis(bis(dimethylsilyl)amide) gadolinium complex (1,3-[(t-Bu)$Me_2Si]_2C_9H_5Gd[N(SiHMe_2)_2]_2$), 0.275 mmol of dimethylaniliniumtetrakis(pentafluorophenyl)borate [$Me_2NHPhB(C_6F_5)_4$], and 1.1 mmol of diisobutyl aluminum hydride were added into a glass container and 40 mL of toluene was added to yield a catalyst solution.
The catalyst solution was added into the pressure-resistant stainless steel reactor, and heated to 70 °C.
Next, ethylene as a non-conjugated olefin compound was added into the pressure-resistant stainless steel reactor at a pressure of 1.5 MPa, further 80 mL of a toluene solution containing 20 g of 1,3-butadiene as a conjugated diene compound was added into the pressure-resistant stainless steel reactor for 8 hr, and copolymerization was performed at 70 °C for a total of 8.5 hr.
Next, 1 mL of an isopropanol solution of 5 mass% of 2,2'-methylene-bis(4-ethyl-6-t-butylphenol) (NS-5) was added into the pressure-resistant stainless steel reactor, to terminate the polymerization reaction.
Following this, a large amount of methanol was used to separate a copolymer, which was then vacuum dried at 50 °C to obtain a copolymer A (multicomponent copolymer).
The number-average molecular weight (Mn), the weight-average molecular weight (Mw), and the molecular weight distribution (Mw/Mn) of the obtained copolymer A in terms of polystyrene at a measurement temperature of 40 °C were determined by gel permeation chromatography [GPC: HLC-8121GPC/HT made by Tosoh Corporation, column: 2 $GMH_{HR}$-H(S)HT columns made by Tosoh Corporation, detector: differential refractometer (RI)] with respect to monodisperse polystyrene. As a result, the number-average molecular weight (Mn) was 163,000, the weight-average molecular weight (Mw) was 399,000, and the molecular weight distribution (Mw/Mn) was 2.4.
The proportions (mol%) of an ethylene unit, a styrene unit, and a butadiene unit in the obtained copolymer A were determined from the integral ratio of each peak of a $^1$H-NMR spectrum (100 °C, d-tetrachloroethane standard: 6 ppm). As a result, the proportion of an ethylene unit was 85 mol%, the proportion of a styrene unit was 7 mol%, and the proportion of a butadiene unit was 8 mol%.
The melting point and the endothermic peak energy from 0 °C to 120 °C of the obtained copolymer A were

measured using a differential scanning calorimeter (DSC, "DSCQ2000" made by TA Instruments Japan Inc.) in accordance with JIS K 7121-1987. Specifically, the endothermic peak energy was measured by increasing the temperature from -150 °C to 150 °C at a heating rate of 10 °C/min and measuring the endothermic peak (enthalpy relaxation) from 0 °C to 120 °C during the time (i.e. during first run). As a result, the melting point was 63 °C, and the endothermic peak energy was 35.6 J/g.

The degree of crystallinity was calculated from the ratio between the crystal melting energy of polyethylene of 100 % crystal component and the melting peak energy of the copolymer A measured using a DSC. As a result, the degree of crystallinity was 12.1 %.

Further, no peak was observed from 10 ppm to 24 ppm in a $^{13}C$-NMR spectrum chart of the copolymer A, demonstrating that the main chain of the copolymer A consisted only of an acyclic structure.

<Production of copolymer A (multicomponent copolymer)>

2,000 g of a toluene solution containing 120 g (2.22 mol) of 1,3-butadiene was added into a sufficiently dried 4 L stainless steel reactor, and then ethylene was introduced at 1.72 MPa.

Meanwhile, in a glove box in a nitrogen atmosphere, 28.5 μmol of bis(2-phenylindenyl)gadoliniumbis(dimethylsilylamide) $[(2\text{-}PhC_9H_6)_2GdN(SiHMe_2)_2]$, 28.5 μmol of dimethylaniliniumtetrakis(pentafluorophenyl)borate $[Me_2NHPhB(C_6F_5)_4]$, and 2.00 mmol of diisobutyl aluminum hydride were added into a glass container and dissolved in 40 ml of toluene, to yield a catalyst solution.

The obtained catalyst solution in an amount of 25.0 μmol in terms of gadolinium was added into the stainless steel reactor, and polymerization was performed at 50 °C for 90 min.

Next, 5 ml of an isopropanol solution of 5 mass% of 2,2'-methylene-bis(4-ethyl-6-t-butylphenol) (NS-5) was added to terminate the reaction.

Further, a large amount of methanol was added to separate a copolymer, which was then vacuum dried at 70 °C to obtain a copolymer B (bipolymer).

The number-average molecular weight (Mn), the weight-average molecular weight (Mw), and the molecular weight distribution (Mw/Mn) of the obtained copolymer B were determined in the same way as the copolymer A. As a result, the number-average molecular weight (Mn) was 121,000, the weight-average molecular weight (Mw) was 473,000, and the molecular weight distribution (Mw/Mn) was 3.88.

The proportions (mol%) of an ethylene unit, a styrene unit, and a butadiene unit in the obtained copolymer B were determined in the same way as the copolymer A. As a result, the proportion of an ethylene unit was 43 mol%, the proportion of a styrene unit was 0 mol%, and the proportion of a butadiene unit was 57 mol%.

The melting point, the glass transition temperature, and the endothermic peak energy from 0 °C to 120 °C of the obtained copolymer B were measured in the same way as the copolymer A. As a result, the melting point was 120 °C, the glass transition temperature was -103 °C, and the endothermic peak energy was 48.5 J/g.

The degree of crystallinity was calculated from the ratio between the crystal melting energy of polyethylene of 100 % crystal component and the melting peak energy of the copolymer B measured using a DSC. As a result, the degree of crystallinity was 16.5 %.

<Production of modified conjugated diene-based polymer A>

In an 800 mL pressure-resistant glass container that had been dried and purged with nitrogen, a cyclohexane solution of 1,3-butadiene and a cyclohexane solution of styrene were added to yield 60 g of 1,3-butadiene and 15 g of styrene. 0.70 mmol of 2,2-ditetrahydrofurylpropane was then added, and further 0.70 mmol of n-butyllithium as a polymerization initiator was added. Subsequently, the mixture was polymerized (anionic polymerization) for 1.5 hr at 50 °C, thus obtaining a styrene-butadiene copolymer having a lithium-type active site at its end. The polymerization conversion ratio at the time was approximately 100 %.

Subsequently, 0.063 mmol of N,N-bis(trimethylsilyl)-3-aminopropyltriethoxysilane as a modifier was added, and a modification reaction was carried out for 30 min at 50 °C.

Following this, 2mL of an isopropanol solution containing 5 mass% of 2,6-di-t-butyl-4-cresol (BHT) as an age resistor was added at 50 °C to terminate the polymerization reaction. Further, after causing reprecipitation in isopropanol containing a trace amount of BHT, drying was performed using a drum dryer to obtain a modified styrene-butadiene copolymer as a modified conjugated diene-based polymer A.

The chemical formula of the modifier used is as follows:

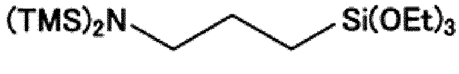

<Production of modified conjugated diene-based polymer B>

The same procedure as in the production of the modified conjugated diene-based polymer A was performed except that 0.063 mmol of N-(1,3-dimethylbutylidene)-3-(triethoxysilyl)-1-propaneamine was used as a modifier instead of 0.063 mmol of N,N-bis(trimethylsilyl)-3-aminopropyltriethoxysilane, to obtain a modified styrene-butadiene copolymer as a modified conjugated diene-based polymer B.

The chemical formula of the modifier used is as follows:

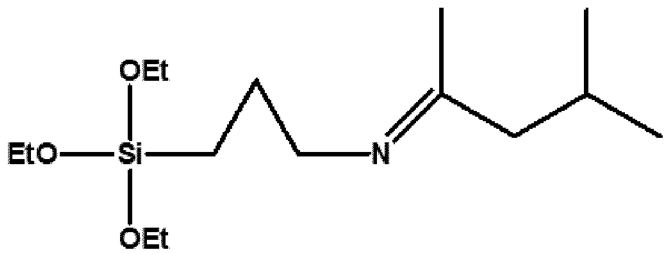

<Production of modified conjugated diene-based polymer C>

In an 800 mL pressure-resistant glass container that had been dried and purged with nitrogen, a cyclohexane solution of 1,3-butadiene and a cyclohexane solution of styrene were added to yield 45.5 g of 1,3-butadiene and 24.5 g of styrene. 0.105 mmol of 2,2-ditetrahydrofurylpropane was added, 0.039 mmol of potassium-2-methyl-2-butoxide was added, and further 0.70 mmol of n-butyllithium as a polymerization initiator was added. Subsequently, the mixture was polymerized (anionic polymerization) for 1.5 hr at 50 °C, thus obtaining a styrene-butadiene copolymer having a lithium-type active site at its end. The polymerization conversion ratio at the time was approximately 100 %.

Subsequently, 0.063 mmol of N-(1,3-dimethylbutylidene)-3-(triethoxysilyl)-1-propaneamine as a modifier was added, and a modification reaction was carried out for 30 min at 50 °C.

Following this, 2mL of an isopropanol solution containing 5 mass% of 2,6-di-t-butyl-4-cresol (BHT) as an age resistor was added at 50 °C to terminate the polymerization reaction. Further, after causing reprecipitation in isopropanol containing a trace amount of BHT, drying was performed using a drum dryer to obtain a modified styrene-butadiene copolymer as a modified conjugated diene-based polymer C.

<Production of unmodified conjugated diene-based polymer>

The same procedure as in the production of the modified conjugated diene-based polymer B was performed except that no modification reaction using a modifier was performed, to obtain an unmodified conjugated diene-based polymer.

<Production of silica B>

89 L of water and 1.70 L of sodium silicate aqueous solution ($SiO_2$: 160 g/L, molar ratio of $SiO_2/Na_2O$: 3.3) were charged into a jacketed stainless steel reaction vessel (180 L) equipped with a stirrer. The solution was then heated to 75 °C. The $Na_2O$ concentration of the resultant solution was 0.015 mol/L.

The same sodium silicate aqueous solution as described above and sulfuric acid (18 mol/L) were simultaneously added dropwise to the solution at flow rates of 520 mL/min and 23 mL/min, respectively, while the temperature of the solution was maintained at 75 °C. Neutralization was carried out while maintaining the $Na_2O$ concentration in the reaction solution in a range of 0.005 mol/L to 0.035 mol/L by adjusting the flow rates. The reaction solution began to grow cloudy during the reaction. After 45 minutes, the viscosity increased, yielding a gel-like solution. Addition of the sodium silicate aqueous solution and sulfuric acid was continued, and the reaction was stopped after 100 min. The silica concentration of the resultant solution was 60 g/L. The same sulfuric acid as above was again added until the pH of the solution reached 3, yielding a silicate slurry. This silicate slurry was filtrated by a filter press and then washed with water to yield a wet cake. The wet cake was then rendered into a slurry using an emulsifier and dried with a spray dryer to yield silica B (wet silica).

For the silica B, based on a mercury press-in method, a mercury porosimeter "POREMASTER-33" (made by Quantachrome) was used first to increase the pressure from 1 PSI to 32000 PSI and measure the mercury charge rate for micropores with openings in a range of $1.2 \times 10^5$ nm to 6 nm in diameter on the outer surface of the silica B. The diameter (M1) at the position with the peak charge rate, as illustrated in FIG. 2, was determined. Next, the pressure was

decreased from 32000 PSI to 1 PSI to discharge mercury from the micropores. The diameter (M2) at the position of the peak discharge rate on the resulting discharge curve was determined. As a result, the ink bottle-shaped micropore index (IB) calculated from M1 - M2 was 20.00.

The specific surface area by cetyltrimethylammonium bromide adsorption (CTAB) of the silica B was measured in accordance with the method described in ASTM D3765-92, by preparing a separate cetyltrimethylammonium bromide standard solution in place of IRB#3 (83.0 $m^2/g$), which is the standard for carbon black measurement, carrying out standardization of silica OT (sodium di-2-ethylhexyl sulfosuccinate) solution using the CE-TRAB standard solution, and, on the assumption that the cross-sectional area per one cetyltrimethylammonium bromide molecule adsorbed on the surface of the silica B is 0.35 $nm^2$, calculating the specific surface area ($m^2/g$) from the amount of cetyltrimethylammonium bromide adsorption. As a result, the CTAB of the silica B was 180.

Furthermore, a fixed amount of a sample of the silica B was weighed, the sample was heated at 750 °C for 3 hr, and then the mass of the decrease amount (weight loss on ignition) was measured. Moreover, a fixed amount of a sample of the silica B was weighed, the sample was heated at 105 °C for 2 hr, and then the mass of the decrease amount (weight loss on heating) was measured. The value of "weight loss on ignition - weight loss on heating" was calculated at 3.2 mass%.

<Preparation and evaluation of rubber composition>

Rubber compositions were produced using a typical Banbury mixer in accordance with the formulations listed in Tables 1 and 2. The rubber compositions of all examples were observed using a scanning electron microscope (SEM), and determined to have a structure in which the modified conjugated diene-based polymer forms a continuous phase and the multicomponent copolymer forms a dispersed phase. Rubber compositions were produced using a typical Banbury mixer in accordance with the formulations listed in Table 3. The rubber compositions of all examples were observed using a scanning electron microscope (SEM), and determined to have a structure in which the modified conjugated diene-based polymer forms a continuous phase and the multicomponent copolymer forms a dispersed phase.

Each rubber composition was used to evaluate the low heat generating property and the crack growth resistance by the following methods. The results are listed in Tables 1 to 3.

(1) Low heat generating property

For each of the rubber compositions of all examples in Tables 1 and 2 and Comparative Example 10 in Table 3, after the rubber composition was vulcanized at 160 °C for 20 min, tanδ was measured under the conditions of temperature: 50 °C, dynamic strain: 10 %, and frequency: 15 Hz, using a dynamic shear viscoelasticity meter (made by Rheometrics, Inc.). For each of the rubber compositions of the examples in Table 3 other than Comparative Example 10, after the rubber composition was vulcanized at 160 °C for 20 min, tanδ was measured under the conditions of temperature: 50 °C, dynamic strain: 10 %, and frequency: 15 Hz, using a dynamic shear viscoelasticity meter (made by Rheometrics, Inc.). Using the inverse of the measurement value, the measurement value is expressed as an index with the measurement value of Example 3 being 100 in the examples employing carbon black in Table 1, the measurement value is expressed as an index with the measurement value of Example 9 being 100 in the examples employing silica in Table 2, and the measurement value is expressed as an index with the measurement value of Example 13 being 100 in the examples in Table 3. A larger index value indicates better low heat generating property.

(2) Crack growth resistance

A JIS No. 3 test piece was produced from each of the rubber compositions of all examples in Tables 1 to 3. A crack of 0.5 mm was made in a center part of the test piece, the test piece was repeatedly subjected to fatigue under a constant strain of 0 % to 100 % at room temperature, and the number of times the test piece was subjected to fatigue until broken was counted. The measurement value is expressed as an index with the measurement value of Example 3 being 100 in the examples employing carbon black in Table 1, the measurement value is expressed as an index with the measurement value of Example 9 being 100 in the examples employing silica in Table 2, and the measurement value is expressed as an index with the measurement value of Example 13 being 100 in the examples in Table 3. A larger index value indicates better crack growth resistance.

Table 1

| | | | Comparative Example 1 | Comparative Example 2 | Comparative Example 3 | Comparative Example 4 | Example 1 | Example 2 | Example 3 | Example 4 | Example 5 | Example 6 |
|---|---|---|---|---|---|---|---|---|---|---|---|---|
| Formulation | Copolymer A (multicomponent copolymer) | Parts by mass | 100 | - | - | - | 10 | 20 | 30 | 40 | 50 | 30 |
| | Copolymer B (bipolymer) | | - | - | 100 | - | - | - | - | - | - | - |
| | Modified conjugated diene-based polymer A | | - | - | - | - | - | - | - | - | - | 70 |
| | Modified conjugated diene-based polymer B | | - | 100 | - | - | 90 | 80 | 70 | 60 | 50 | - |
| | Unmodified conjugated diene-based polymer | | - | - | - | 100 | - | - | - | - | - | - |
| | Carbon black A *1 | | 50 | 50 | 50 | 50 | 50 | 50 | 50 | 50 | 50 | 50 |
| | Silica A *2 | | - | - | - | - | - | - | - | - | - | - |
| | Silane coupling agent A *3 | | - | - | - | - | - | - | - | - | - | - |
| | Softener *4 | | 10 | 10 | 10 | 10 | 10 | 10 | 10 | 10 | 10 | 10 |
| | Age resistor *5 | | 1 | 1 | 1 | 1 | 1 | 1 | 1 | 1 | 1 | 1 |
| | Stearic acid | | 2 | 2 | 2 | 2 | 2 | 2 | 2 | 2 | 2 | 2 |
| | Zinc oxide | | 2.5 | 2.5 | 2.5 | 2.5 | 2.5 | 2.5 | 2.5 | 2.5 | 2.5 | 2.5 |
| | Wax *6 | | 2 | 2 | 2 | 2 | 2 | 2 | 2 | 2 | 2 | 2 |
| | Vulcanization acceleratorMBTS *7 | | 1 | 1 | 1 | 1 | 1 | 1 | 1 | 1 | 1 | 1 |

(continued)

| | | | Comparative Example 1 | Comparative Example 2 | Comparative Example 3 | Comparative Example 4 | Example 1 | Example 2 | Example 3 | Example 4 | Example 5 | Example 6 |
|---|---|---|---|---|---|---|---|---|---|---|---|---|
| | Vulcanization accelerator TBBS *8 | | 0.5 | 0.5 | 0.5 | 0.5 | 0.5 | 0.5 | 0.5 | 0.5 | 0.5 | 0.5 |
| | Vulcanization accelerator DPG *9 | | 1 | 1 | 1 | 1 | 1 | 1 | 1 | 1 | 1 | 1 |
| | Sulfur | | 1.5 | 1.5 | 1.5 | 1.5 | 1.5 | 1.5 | 1.5 | 1.5 | 1.5 | 1.5 |
| Evaluation | Low heat generating property | Index | 73 | 114 | 77 | 61 | 110 | 106 | 100 | 99 | 82 | 91 |
| | Crack growth resistance | Index | 149 | 0.12 | 26 | 0.15 | 81 | 87 | 100 | 106 | 109 | 104 |

Table 2

| | | | Comparative Example 5 | Comparative Example 6 | Comparative Example 7 | Comparative Example 8 | Example 7 | Example 8 | Example 9 | Example 10 | Example 11 | Example 12 |
|---|---|---|---|---|---|---|---|---|---|---|---|---|
| Formulation | Copolymer A (multicomponent copolymer) | Parts by mass | 100 | - | - | - | 10 | 20 | 30 | 40 | 50 | 30 |
| | Copolymer B (bipolymer) | | - | - | 100 | - | - | - | - | - | - | - |
| | Modified conjugated diene-based polymer A | | - | - | - | - | - | - | - | - | - | 70 |
| | Modified conjugated diene-based polymer B | | - | 100 | - | - | 90 | 80 | 70 | 60 | 50 | - |
| | Unmodified conjugated diene-based polymer | | - | - | - | 100 | - | - | - | - | - | - |
| | Carbon black A *1 | | - | - | - | - | - | - | - | - | - | - |
| | Silica A *2 | | 50 | 50 | 50 | 50 | 50 | 50 | 50 | 50 | 50 | 50 |
| | Silane coupling agent A *3 | | 5 | 5 | 5 | 5 | 5 | 5 | 5 | 5 | 5 | 5 |
| | Softener *4 | | 10 | 10 | 10 | 10 | 10 | 10 | 10 | 10 | 10 | 10 |
| | Age resistor *5 | | 1 | 1 | 1 | 1 | 1 | 1 | 1 | 1 | 1 | 1 |
| | Stearic acid | | 2 | 2 | 2 | 2 | 2 | 2 | 2 | 2 | 2 | 2 |
| | Zinc oxide | | 2.5 | 2.5 | 2.5 | 2.5 | 2.5 | 2.5 | 2.5 | 2.5 | 2.5 | 2.5 |
| | Wax *6 | | 2 | 2 | 2 | 2 | 2 | 2 | 2 | 2 | 2 | 2 |
| | Vulcanization acceleratorMBTS *7 | | 1 | 1 | 1 | 1 | 1 | 1 | 1 | 1 | 1 | 1 |

(continued)

| | | | Comparative Example 5 | Comparative Example 6 | Comparative Example 7 | Comparative Example 8 | Example 7 | Example 8 | Example 9 | Example 10 | Example 11 | Example 12 |
|---|---|---|---|---|---|---|---|---|---|---|---|---|
| | Vulcanization accelerator TBBS *8 | | 0.5 | 0.5 | 0.5 | 0.5 | 0.5 | 0.5 | 0.5 | 0.5 | 0.5 | 0.5 |
| | Vulcanization accelerator DPG *9 | | 1 | 1 | 1 | 1 | 1 | 1 | 1 | 1 | 1 | 1 |
| | Sulfur | | 1.5 | 1.5 | 1.5 | 1.5 | 1.5 | 1.5 | 1.5 | 1.5 | 1.5 | 1.5 |
| Evaluation | Low heat generating property | Index | 72 | 117 | 77 | 59 | 106 | 103 | 100 | 100 | 84 | 99 |
| | Crack growth resistance | Index | 137 | 0.16 | 24 | 0.19 | 89 | 96 | 100 | 101 | 104 | 103 |

Table 3

| | | | Comparative Example 9 | Comparative Example 10 | Example 13 | Example 14 |
|---|---|---|---|---|---|---|
| Formulation | Copolymer A (multicomponent copolymer) | Parts by mass | - | 100 | 30 | 40 |
| | SEBS *10 | | 30 | - | - | - |
| | Modified conjugated diene-based polymer C | | 70 | - | 70 | 60 |
| | Carbon black B *11 | | 6 | 6 | 6 | 6 |
| | Silica B | | 50 | 50 | 50 | 50 |
| | Silane coupling agent B *12 | | 6 | 6 | 6 | 6 |
| | Softener *4 | | 10 | 10 | 10 | 10 |
| | Age resistor *5 | | 1 | 1 | 1 | 1 |
| | Stearic acid | | 2 | 2 | 2 | 2 |
| | Zinc oxide | | 2.5 | 2.5 | 2.5 | 2.5 |
| | Wax *6 | | 2 | 2 | 2 | 2 |
| | Vulcanization accelerator MBTS *7 | | 1 | 1 | 1 | 1 |
| | Vulcanization accelerator TBBS *8 | | 0.5 | 0.5 | 0.5 | 0.5 |
| | Vulcanization accelerator DPG *9 | | 1 | 1 | 1 | 1 |
| | Sulfur | | 1.5 | 1.5 | 1.5 | 1.5 |
| Evaluation | Low heat generating property | Index | 52 | 57 | 100 | 90 |
| | Crack growth resistance | Index | 53 | 124 | 100 | 103 |

*1 Carbon black A: HAF carbon, product name "#70" made by Asahi Carbon Co., Ltd.
*2 Silica A: product name "NIPSIL AQ®" made by Tosoh Silica Corporation (NIPSIL AQ is a registered trademark in Japan, other countries, or both).
*3 Silane coupling agent A: bis(3-triethoxysilylpropyl) disulfide, product name "Si75®" made by Evonik Industries AG (Si75 is a registered trademark in Japan, other countries, or both), average sulfur chain length: 2.35.
*4 Softener: process oil.
*5 Age resistor 6PPD: N-(1,3-dimethylbutyl)-N'-phenyl-p-phenylenediamine, product name "NOCRAC 6C®" made by Ouchi Shinko Chemical Industrial Co., Ltd. (NOCRAC is a registered trademark in Japan, other countries, or both).
*6 Wax: product name "SUNTIGHT®" made by Seiko-Chemical Co., Ltd. (SUNTIGHT is a registered trademark in Japan, other countries, or both).
*7 Vulcanization accelerator MBTS: di-2-benzothiazolyl disulfide, product name "SANCELER DM" made by Sanshin Chemical Industry Co., Ltd.
*8 Vulcanization accelerator TBBS: N-tert-butyl-2-benzothiazolyl sulfenamide, product name "SANCELER NS" made by Sanshin Chemical Industry Co., Ltd.
*9 Vulcanization accelerator DPG: 1,3-diphenyl guanidine, product name "SANCELER D" made by Sanshin Chemical Industry Co., Ltd.
*10 SEBS: "DYNARON 9901P" made by JSR Corporation.
*11 Carbon black B: "SEAST 7HM" made by Tokai Carbon Co., Ltd.
*12 Silane coupling agent B: "NXT" made by Momentive Performance Materials Inc.

As can be understood from Tables 1 to 3, the rubber composition of each Example according to the present disclosure can be used to produce a rubber article having excellent balance between crack growth resistance and low

heat generating property.

INDUSTRIAL APPLICABILITY

It is thus possible to provide a rubber composition capable of producing a rubber article having excellent balance between crack growth resistance and low heat generating property.

It is also possible to provide a tire, a conveyor belt, a rubber crawler, an anti-vibration device, a seismic isolation device, and a hose having excellent balance between crack growth resistance and low heat generating property.

REFERENCE SIGNS LIST

A approximately cylindrical micropore
B ink bottle-shaped micropore
$M_a$ diameter of opening of micropore A on outer surface of particle
$M_b$ diameter of opening of micropore B on outer surface of particle
$R_a$ micropore diameter (inner diameter) of micropore A inside particle
$R_b$ micropore diameter (inner diameter) of micropore B inside particle
C mercury charge curve
D mercury discharge curve
M1 diameter of opening indicating maximum value of mercury charge rate
M2 diameter of opening indicating maximum value of mercury discharge rate
IB ink bottle-shaped micropore index

## Claims

1. A rubber composition comprising:

   a rubber component (a) containing a modified conjugated diene-based polymer (a1) and a multicomponent copolymer (a2) that contains a conjugated diene unit, a non-conjugated olefin unit, and an aromatic vinyl unit; and a filler (b).

2. The rubber composition according to claim 1, wherein a proportion of the multicomponent copolymer (a2) in the rubber component (a) is 5 mass% to 40 mass%.

3. The rubber composition according to claim 1 or 2, wherein the modified conjugated diene-based polymer (a1) forms a continuous phase, and the multicomponent copolymer (a2) forms a dispersed phase.

4. The rubber composition according to any of claims 1 to 3, wherein in the multicomponent copolymer (a2), a proportion of the conjugated diene unit is 1 mol% to 50 mol%, a proportion of the non-conjugated olefin unit is 40 mol% to 97 mol%, and a proportion of the aromatic vinyl unit is 2 mol% to 35 mol%.

5. The rubber composition according to any of claims 1 to 4, wherein the modified conjugated diene-based polymer (a1) is obtained by modification with a modifier having one or more atoms selected from a nitrogen atom, a silicon atom, and an oxygen atom.

6. The rubber composition according to any of claims 1 to 5, wherein a melting point of the multicomponent copolymer (a2) measured by a differential scanning calorimeter (DSC) is 30 °C to 130 °C.

7. The rubber composition according to any of claims 1 to 6, wherein an endothermic peak energy of the multicomponent copolymer (a2) from 0 °C to 120 °C measured by a differential scanning calorimeter (DSC) is 10 J/g to 150 J/g.

8. The rubber composition according to any of claims 1 to 7, wherein a glass transition temperature of the multicomponent copolymer (a2) measured by a differential scanning calorimeter (DSC) is 0 °C or less.

9. The rubber composition according to any of claims 1 to 8, wherein a degree of crystallinity of the multicomponent

copolymer (a2) is 0.5 % to 50 %.

**10.** The rubber composition according to any of claims 1 to 9, wherein the non-conjugated olefin unit does not have a cyclic structure.

**11.** The rubber composition according to any of claims 1 to 10, wherein the non-conjugated olefin unit consists only of an ethylene unit.

**12.** The rubber composition according to any of claims 1 to 11, wherein the aromatic vinyl unit contains a styrene unit.

**13.** The rubber composition according to any of claims 1 to 12, wherein the conjugated diene unit contains at least one selected from a 1,3-butadiene unit and an isoprene unit.

**14.** The rubber composition according to any of claims 1 to 13, wherein a main chain of the multicomponent copolymer (a2) consists only of an acyclic structure.

**15.** A tire produced using the rubber composition according to any of claims 1 to 14.

**16.** A conveyor belt produced using the rubber composition according to any of claims 1 to 14.

**17.** A rubber crawler produced using the rubber composition according to any of claims 1 to 14.

**18.** An anti-vibration device produced using the rubber composition according to any of claims 1 to 14.

**19.** A seismic isolation device produced using the rubber composition according to any of claims 1 to 14.

**20.** A hose produced using the rubber composition according to any of claims 1 to 14.

FIG. 1

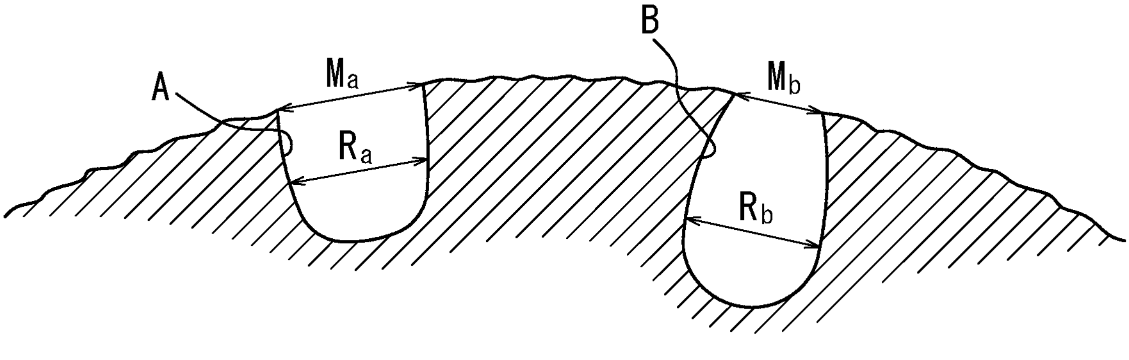

*FIG. 2*

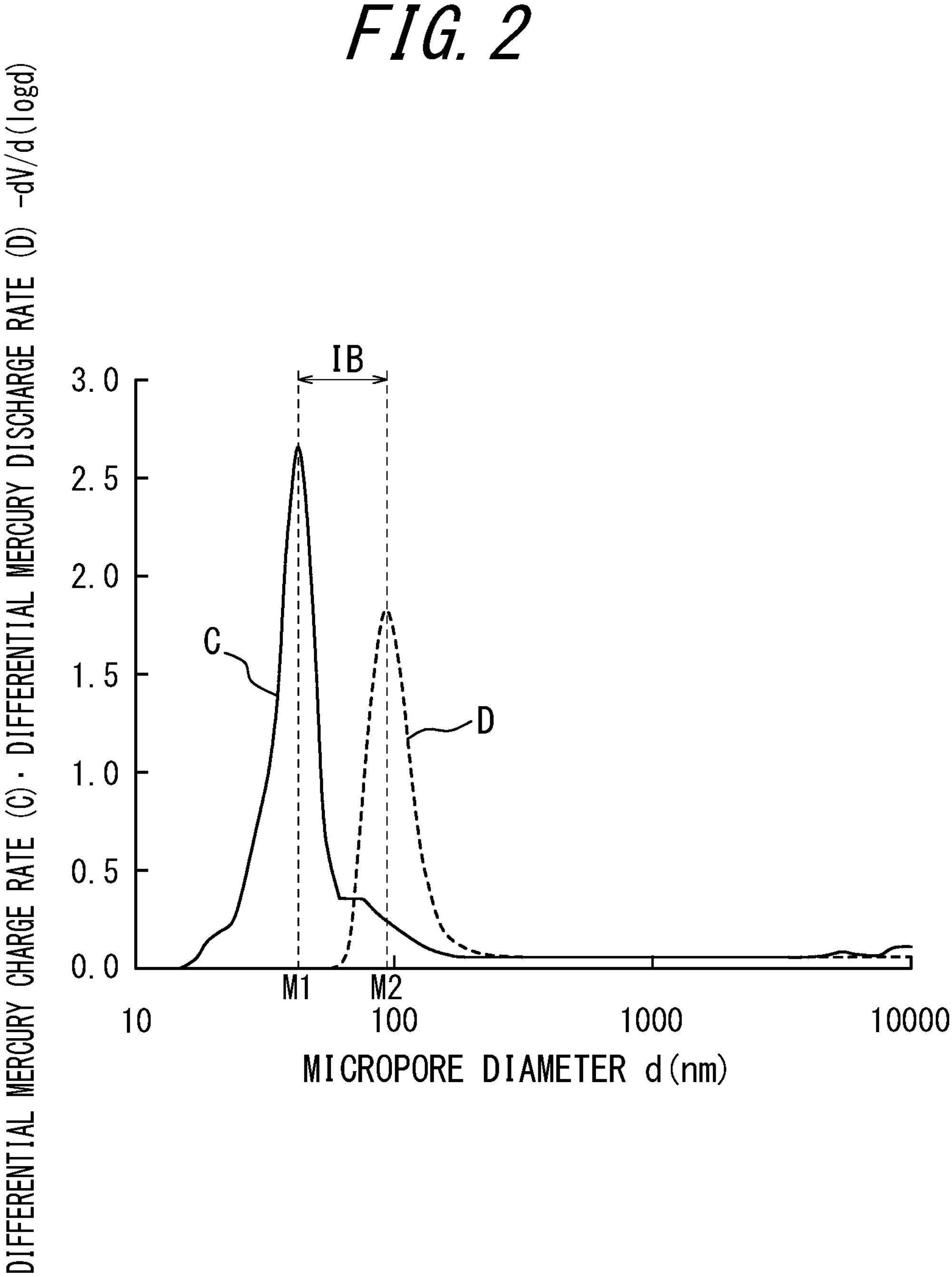
DIFFERENTIAL MERCURY CHARGE RATE (C)・DIFFERENTIAL MERCURY DISCHARGE RATE (D) -dV/d(logd)
IB
3.0
2.5
2.0
1.5
1.0
0.5
0.0
C
D
M1
M2
10
100
1000
10000
MICROPORE DIAMETER d(nm)

## INTERNATIONAL SEARCH REPORT

International application No.
PCT/JP2018/046873

A. CLASSIFICATION OF SUBJECT MATTER
Int.Cl. C08L15/00(2006.01)i, B60C1/00(2006.01)i, B62D55/253(2006.01)i, B65G15/32(2006.01)i, C08C19/22(2006.01)i, C08C19/25(2006.01)i, C08L9/00(2006.01)i, F16F1/36(2006.01)i, F16F15/08(2006.01)i, F16L11/10(2006.01)i

According to International Patent Classification (IPC) or to both national classification and IPC

B. FIELDS SEARCHED

Minimum documentation searched (classification system followed by classification symbols)
Int.Cl. C08L15/00, B60C1/00, B62D55/253, B65G15/32, C08C19/22, C08C19/25, C08L9/00, F16F1/36, F16F15/08, F16L11/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2012-188601 A (BRIDGESTONE CORPORATION) 04 October 2012, entire text, particularly, claims 1-14, paragraphs [0001], [0013], [0014], examples 1-4 (Family: none) | 1-20 |
| Y | JP 2017-75274 A (BRIDGESTONE CORPORATION) 20 April 2017, entire text, particularly, claims 1-9, paragraphs [0002], [0015], [0016], examples 1-5, comparative example 1 (Family: none) | 1-20 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22.01.2019 | 05.02.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/046873

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2015/190072 A1 (BRIDGESTONE CORPORATION) 17 December 2015, entire text, particularly, claims 1-11, paragraphs [0002], [0010], [0021], [0145] & US 2017/0137552 A1, claims 1-11, paragraphs [0002], [0014], [0034], [0035], [0215] & EP 3156429 A1 & CN 106459310 A | 1-20 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015190072 A1